# EUROPEAN PATENT APPLICATION

(11) **EP 4 835 921 A1**
(43) Date of publication of application: **04.11.2026**
(21) Application number: 24912989.1
(22) Date of filing: 26.12.2024
(51) Int. Cl.: H01B 13/00, H01B 1/06, H01B 1/10

(54) **METHOD FOR PRODUCING SULFIDE SOLID ELECTROLYTE**

(30) Priority: 26.12.2023 JP 2023219673
(71) Applicant: Idemitsu Kosan Co.,Ltd., Tokyo 100-8321 (JP)
(72) Inventor: KAGOTA, Yasuhito, Tokyo 100-8321 (JP); KASATANI, Yuichi, Tokyo 100-8321 (JP); YOSHINAGA, Kentaro, Tokyo 100-8321 (JP)
(74) Representative: Vossius & Partner Patentanwälte Rechtsanwälte mbB
(86) International application number: PCT/JP2024/046111
(87) International publication number: WO 2025/143103

(57) **Abstract**

Provided is a method for producing a sulfide solid electrolyte which is capable of more efficiently producing a sulfide solid electrolyte having high ionic conductivity, and which can be readily adapted for mass production, the method including: mixing a raw material-containing substance and a complexing agent to obtain an electrolyte precursor; heating the electrolyte precursor using a flow-through heater to obtain a powder; transferring the powder from the flow-through heater to a separation apparatus through a transfer pipe; and collecting the transferred powder using the separation apparatus; the method including, in the transferring, heating the transfer pipe.

## Description

### Technical Field

The present invention relates to a method for producing a sulfide solid electrolyte.

### Background Art

In recent years, with the rapid spread of information-related devices such as personal computers, video cameras, and mobile phones and communication devices, the development of batteries used as a power source for the devices has been regarded as important. Conventionally, an electrolytic solution containing a flammable organic solvent has been used in batteries used for such applications, however by making the battery all-solid, a battery in which the electrolytic solution is replaced with a solid electrolyte layer, that is, an all-solid-state battery, has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. In recent years, studies on mass production of solid electrolytes have been progressing, and the liquid phase method using a complexing agent has been attracting attention as a method that is easily adaptable to scale-up. For example, a method for producing a solid which contains mixing a complexing agent and a solid electrolyte raw material to prepare an electrolyte precursor (for example, see PTL 1) by using a specific compound having amino groups as the complexing agent, and a method for producing a solid electrolyte which contains drying a slurry containing a complexing agent and an electrolyte precursor by fluidized drying using media particles (see, for example, PTL 2), etc., are known.

### Citation List

### Patent Literature

PTL 1: WO 2020/105737 A
PTL 2: WO 2021/230189 A

### Summary of Invention

### Technical Problem

An object of the present invention is to provide a method for producing a sulfide solid electrolyte that can more efficiently produce a sulfide solid electrolyte having high ionic conductivity and that can easily be adapted for mass production.

### Solution to Problem

The method for producing a sulfide solid electrolyte according to the present invention is
a method for producing a sulfide solid electrolyte including
mixing a raw material-containing substance containing a lithium atom, a phosphorus atom, a sulfur atom, and a halogen atom and a complexing agent to obtain an electrolyte precursor;
heating the electrolyte precursor using a flow-through heater to obtain a powder;
transferring the powder from the flow-through heater to a separation apparatus through a transfer pipe; and
collecting the transferred powder using the separation apparatus;
in which in the transferring, the method includes heating the transfer pipe.

### Advantageous Effects of Invention

According to the present invention, it is possible to provide a method for producing a sulfide solid electrolyte that can more efficiently produce a sulfide solid electrolyte having high ionic conductivity and that can easily be adapted for mass production.

### Brief Description of Drawings

[Fig. 1] Fig. 1 is a flowchart of an apparatus including a pneumatic conveying dryer and a bag filter used in Example 1.
[Fig. 2] Fig. 2 is an X-ray diffraction spectrum of the crystalline sulfide solid electrolytes obtained in Examples 1 to 3.
[Fig. 3] Fig. 3 is an X-ray diffraction spectrum of the crystalline sulfide solid electrolytes obtained in Comparative Examples 1 to 3.

### Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the Examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more desirable to combine the preferred ones with each other.

### (Findings Obtained by the Inventors to Reach the Present Invention)

As a result of intensive studies to solve the above-described problems, the inventors have found the following matters, and have completed the present invention.

In recent years, as studies on the practical application of all-solid-state batteries have been progressing, the mass production of sulfide solid electrolytes has become an urgent issue, and studies on improving production efficiency are underway. The inventors of the present invention have been focusing on developing a liquid phase method, which is relatively easy to scale up, and in particular a heterogeneous method that uses a complexing agent during the reaction of solid electrolyte raw materials. As the development progressed, it became clear that when performing a complex decomposition process to remove the complexing agent from the electrolyte precursor obtained by mixing the solid electrolyte raw material and the complexing agent, performing the complex decomposition at a higher temperature leads to improved efficiency. On the other hand, to collect the powdered solid electrolyte obtained by complex decomposition, a separation apparatus such as a bag filter is used. However, separation apparatuses such as bag filters have an upper limit to the operating temperature due to material restrictions. Therefore, it was found that there is a limit to increasing the temperature of the complex decomposition.

Therefore, the inventors focused on the temperature of the fluid containing the solid electrolyte from the heating apparatus such as a dryer used for complex decomposition to the time when the fluid is supplied to the separation apparatus. The fluid containing the solid electrolyte contains an amorphous sulfide solid electrolyte, but may contain an amorphous sulfide solid electrolyte in which a complexing agent remains (which may be said to be in a state where complex decomposition is in progress), or an electrolyte precursor.

The temperature of the fluid containing the solid electrolyte was lowered in the transfer pipe from the heating apparatus for complex decomposition to the separation apparatus. However, by maintaining the temperature, the complex decomposition proceeded further, and it was found that the solid electrolyte could be produced more efficiently.

The above-mentioned PTL 1 focuses on the complexing agent used, and focuses on the fact that elution of halogen atoms can be suppressed by forming an electrolyte precursor, and an attempt is made to obtain a sulfide solid electrolyte having high ionic conductivity. Furthermore, the above-mentioned PTL 2 focuses on suppressing a deterioration reaction in which components that are likely to dissolve from a solid electrolyte or an electrolyte precursor into a solvent are eluted by instantaneously drying a slurry containing a complexing agent and the electrolyte precursor by fluidized drying using media particles, and an attempt is made to obtain a solid electrolyte having high ionic conductivity.

However, none of the PTLs pays any attention to the temperature up to the separation apparatus that collects the powdered solid electrolyte after complex decomposition to remove the complexing agent from the electrolyte precursor, nor do they pay any attention to the fact that the complex decomposition is advanced by maintaining the temperature, thereby producing a solid electrolyte more efficiently.

Based on the above findings, the inventors continued their development and, as a result, have enabled more efficient production of a solid electrolyte by proceeding the complex decomposition using a simple method in which, after performing complex decomposition to remove the complexing agent from the electrolyte precursor, the temperature is maintained until the powdered solid electrolyte is collected in a separation apparatus. Furthermore, since the production method according to the present invention employs a reaction between a raw material-containing substance and a complexing agent (liquid phase method) and heating using a flow-through heater, it can be easily scaled up and easily adapted to mass production.

### (Regarding Various Aspects of the Present Embodiment)

The method for producing a sulfide solid electrolyte according to a first aspect of the present embodiment is
a method for producing a sulfide solid electrolyte including
mixing a raw material-containing substance containing a lithium atom, a phosphorus atom, a sulfur atom, and a halogen atom and a complexing agent to obtain an electrolyte precursor;
heating the electrolyte precursor using a flow-through heater to obtain a powder;
transferring the powder from the flow-through heater to a separation apparatus through a transfer pipe; and
collecting the transferred powder using the separation apparatus;
in which in the transferring, the method includes heating the transfer pipe.

In a method for producing a sulfide solid electrolyte of the present embodiment, the electrolyte precursor obtained by mixing the solid electrolyte raw material and the complexing agent contains a complexing agent, and a powder of a sulfide solid electrolyte is obtained by removing the complexing agent from the electrolyte precursor. The complex decomposition to remove the complexing agent from the electrolyte precursor is carried out by using a flow-through heater. The electrolyte precursor obtained by the above mixing may contain a complexing agent and a solid electrolyte raw material that did not contribute to the formation of the electrolyte precursor, and a solvent that is used as needed, together with the electrolyte precursor. In the method for producing a sulfide solid electrolyte of the present embodiment, by heating in a heated air stream, together with the complex decomposition to remove the complexing agent from the electrolyte precursor, any remaining complexing agent and solvent that did not contribute to the formation of the electrolyte precursor, if any, can also be removed.

The electrolyte precursor is a precursor of the sulfide solid electrolyte obtained by the production method of the present embodiment, and what can become a sulfide solid electrolyte by removing the complexing agent. Herein, the complexing agent refers to an agent which complexes, that is, an agent capable of forming a complex, and refers to a compound that is likely to form a complex with the solid electrolyte raw material contained in the raw material-containing substance. Therefore, since the electrolyte precursor is obtained by mixing the raw material-containing substance and the complexing agent, more specifically, it can be said to be a complex formed by the solid electrolyte raw material via the complexing agent.

The production method of the present embodiment includes obtaining the electrolyte precursor and then heating the electrolyte precursor using a flow-through heater to obtain a powder. The object to be heated in the heating is the electrolyte precursor. As described above, the electrolyte precursor may be an inclusion containing a complexing agent that did not contribute to the formation of the electrolyte precursor, a solvent that is used as needed, and the like. Furthermore, in the case where the electrolyte precursor is an inclusion containing a complexing agent, a solvent, and the like as a result of the above-mentioned mixing, and is subjected to drying described below, the electrolyte precursor becomes a powder (hereinafter, in the present description, the electrolyte precursor, the inclusion containing a complexing agent that did not contribute to the formation of the electrolyte precursor, and a solvent that is used as needed, may be collectively referred to as the "object to be heated").

When the electrolyte precursor is heated to remove the complexing agent from the electrolyte precursor, it is essential that the electrolyte precursor be heated with a flow-through heater. The heating using a flow-through heater has functions of drying by temperature (heat) and flow, and dispersing the object to be heated and removing the complexing agent by flowing, and it is considered that the complexing agent can be efficiently removed from the electrolyte precursor by these functions. By heating the object to be heated while it is flowing, i.e., by heating the object to be heated while it is moving, the object to be heated is dispersed within the heater, and thus the complexing agent contained in the electrolyte precursor can be heated efficiently. Furthermore, by causing the object to be heated to flow, the complexing agent can be quickly separated and removed. In addition, since regeneration of a complex of a substance obtained by removing the complexing agent from the electrolyte precursor and the complexing agent (hereinafter, also simply referred to as "regeneration of a complex") and generation of impurities by the electrolyte precursor and the complexing agent (hereinafter, also simply referred to as "generation of impurities") are suppressed, a sulfide solid electrolyte having high quality with less impurities and high ionic conductivity can be obtained.

As mentioned above, for efficient complex decomposition, it is preferable to perform the complex decomposition at as high a temperature as possible. However, due to material limitations of the separation apparatus used to recover the powder obtained by heating, there is a restriction that the temperature cannot be increased sufficiently, and it has been found that there is room for improvement in terms of further promoting the complex decomposition. Therefore, focusing on the fact that the temperature of the solid electrolyte-containing fluid discharged from the flow-through heater decreases in the transfer pipe that transfers the fluid to the separation apparatus, the transfer pipe was heated to suppress the decrease in the temperature of the fluid. As a result, complex decomposition of the electrolyte precursor remaining in the fluid, from which the complexing agent was not removed by heating in the flow-through heater, and complex decomposition of the amorphous sulfide solid electrolyte containing the complexing agent further progressed, resulting in more efficient production of a solid electrolyte.

Thus, according to the production method of the present embodiment, a sulfide solid electrolyte having high ionic conductivity could be produced more efficiently.

The method for producing a sulfide solid electrolyte according to a second aspect of the present embodiment is a method in which, in the first aspect,
a heating temperature of the transfer pipe is 80°C or higher and 180°C or lower,
and the method for producing a sulfide solid electrolyte according to a third aspect of the present embodiment is a method in which, in the first or second aspect,
the heating in obtaining the powder is 80°C or higher and 180°C or lower.

By setting the heating temperature of the transfer pipe to 80°C or higher and 180°C or lower, it is possible to efficiently suppress a decrease in the temperature of the solid electrolyte-containing fluid in the transfer pipe, and more efficiently obtain a sulfide solid electrolyte having high ionic conductivity. Furthermore, by setting the heating temperature in obtaining the powder, i.e., the heating temperature in the flow-through heater, to 80°C or higher and 180°C or lower, complex decomposition in the flow-through heater can be promoted more efficiently.

The method for producing a sulfide solid electrolyte according to a fourth embodiment of the present embodiment is a method in which, in any one of the first to the third aspects,
the flow-through heater is a heater selected from a pneumatic conveying dryer, a spray dryer, and a fluidized dryer,
and the method for producing a sulfide solid electrolyte according to a fifth embodiment of the present embodiment is a method in which, in the fourth embodiment,
the flow-through heater is a pneumatic conveying dryer.

In the production method of the present embodiment, the type of the flow-through heater is not particularly limited. However, by employing a heater such as a pneumatic conveying dryer, a spray dryer, and a fluidized dryer, complex decomposition can be promoted more efficiently, resulting in obtaining a sulfide solid electrolyte having high ionic conductivity more efficiently. In addition, among these dryers, a pneumatic conveying dryer is most preferable in that it promotes complex decomposition more efficiently and therefore obtains a sulfide solid electrolyte having high ionic conductivity more efficiently.

The method for producing a sulfide solid electrolyte according to a sixth aspect of the present embodiment is a method that, in the first to fifth aspects,
includes heating the powder collected by the collecting.

By heating in the flow-through heater, the complexing agent is removed from the electrolyte precursor and an amorphous sulfide solid electrolyte is obtained. In other words, the powder collected by collecting can be considered an amorphous sulfide solid electrolyte. By further heating from the heating in the flow-through heater, a crystalline sulfide solid electrolyte is obtained.

In the production method of the present embodiment, it is possible to produce an amorphous sulfide solid electrolyte or a crystalline sulfide solid electrolyte as desired.

### (Solid Electrolyte)

In the description herein, the "solid electrolyte" means an electrolyte that maintains a solid state at 25°C under a nitrogen atmosphere. The sulfide solid electrolyte in the present embodiment is a solid electrolyte that contains a lithium atom, a sulfur atom, a phosphorus atom, and a halogen atom, and has ionic conductivity attributed to the lithium atom.

The "solid electrolyte" contains both of an amorphous solid electrolyte and a crystalline solid electrolyte.

In the description herein, the crystalline solid electrolyte is a solid electrolyte in which a peak derived from the solid electrolyte is observed in an X-ray diffraction pattern in X-ray diffractometry, and the presence or absence of a peak derived from a raw material of the solid electrolyte is not considered. That is, the crystalline solid electrolyte includes a crystal structure derived from the solid electrolyte, and a part thereof may be a crystal structure derived from the solid electrolyte, or the whole thereof may be a crystal structure derived from the solid electrolyte. As long as the crystalline solid electrolyte has the X-ray diffraction pattern as described above, a part of the crystalline solid electrolyte may include an amorphous solid electrolyte. Therefore, the crystalline solid electrolyte includes a so-called glass ceramic obtained by heating an amorphous solid electrolyte to a crystallization temperature or higher.

In addition, in the description herein, the amorphous solid electrolyte has a halo pattern in which a peak other than a peak derived from a material is not substantially observed in an X-ray diffraction pattern in X-ray diffractometry, and the presence or absence of a peak derived from a raw material of the solid electrolyte is not considered.

### [Method for Producing Sulfide Solid Electrolyte]

A method for producing a sulfide solid electrolyte according to the present embodiment is
a method for producing a sulfide solid electrolyte including
mixing a raw material-containing substance containing a lithium atom, a phosphorus atom, a sulfur atom, and a halogen atom and a complexing agent to obtain an electrolyte precursor;
heating the electrolyte precursor using a flow-through heater to obtain a powder;
transferring the powder from the flow-through heater to a separation apparatus through a transfer pipe; and
collecting the transferred powder using the separation apparatus;
in which the transfer pipe is heated.

### [Obtaining Electrolyte Precursor]

The production method of the present embodiment includes obtaining an electrolyte precursor by mixing a raw material-containing substance containing a lithium atom, a phosphorus atom, a sulfur atom, and a halogen atom with a complexing agent.

Regarding the production method of the present embodiment, the raw material-containing substance will be explained first.

### (Raw Material-Containing Substance)

The raw material-containing substance used in the present embodiment contains a lithium atom, a sulfur atom, a phosphorus atom, and a halogen atom, and is specifically a containing substance containing a compound (hereinafter, also referred to as a "solid electrolyte raw material") having one or more selected from the group consisting of these atoms. The raw material-containing substance used in the present embodiment preferably contains two or more of the solid electrolyte raw materials.

Examples of the solid electrolyte raw material contained in the raw material-containing substance includes, a raw material containing at least two kinds of atoms selected from the above four kinds of atoms, such as lithium sulfides; lithium halides such as lithium fluoride, lithium chloride, lithium bromide, and lithium iodide; phosphorus sulfides such as diphosphorus trisulfide (P₂S₃) and diphosphorus pentasulfide (P₂S₅); phosphorus halides such as various phosphorus fluorides (PF₃ and PF₅), various phosphorus chlorides (PCl₃, PCl₅, and P₂Cl₄), various phosphorus bromides (PBr₃ and PBr₅), and various phosphorus iodides (PI₃ and P₂I₄); and thiophosphoryl halides such as thiophosphoryl fluoride (PSF₃), thiophosphoryl chloride (PSCl₃), thiophosphoryl bromide (PSBr₃), thiophosphoryl iodide (PSI₃), thiophosphoryl dichloride fluoride (PSCl₂F), and thiophosphoryl dibromide fluoride (PSBr₂F); and halogen molecules such as fluorine (F₂), chlorine (Cl₂), bromine (Br₂), and iodine (I₂), and bromine (Br₂) and iodine (I₂) are representative and preferred.

Examples that can be used as the solid electrolyte raw materials other than the above include a solid electrolyte raw material containing at least one atom selected from the above four kinds of atoms and containing atoms other than the four kinds of atoms, more specifically, lithium compounds such as lithium oxide, lithium hydroxide, and lithium carbonate; alkali metal sulfides such as sodium sulfide, potassium sulfide, rubidium sulfide, cesium sulfide; metal sulfides such as silicon sulfide, germanium sulfide, boron sulfide, gallium sulfide, tin sulfide (SnS, SnS₂), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride (POCl₃) and phosphorus oxybromide (POBr₃).

Among the above, lithium sulfides, phosphorus sulfides such as diphosphorus trisulfide (P₂S₃) and diphosphorus pentasulfide (P₂S₅), halogen molecules such as fluorine (F₂), chlorine (Cl₂), bromine (Br₂), and iodine (I₂), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred. Preferred combinations of the solid electrolyte raw materials preferably include, for example, a combination of lithium sulfide, diphosphorus pentasulfide, and lithium halide, and a combination of lithium sulfide, diphosphorus pentasulfide, and a halogen molecule; and as the lithium halide, lithium bromide or lithium iodide are preferred, and as the halogen molecule, bromine and iodine are preferred.

In the present embodiment, Li₃PS₄ containing a PS₄ structure can also be used as part of the raw material. Specifically, Li₃PS₄ is produced and prepared in advance, and is used as a raw material.

The content of Li₃PS₄ relative to the total raw materials is preferably 60 to 100% by mole, more preferably 65 to 90% by mole, and even more preferably 70 to 80% by mole.

Further, when using Li₃PS₄ and a halogen molecule, the content of the halogen molecule relative to Li₃PS₄ is preferably 1 to 50% by mole, more preferably 10 to 40% by mole, even more preferably 20 to 30% by mole, and further more preferably 22 to 28% by mole.

The lithium sulfide used in the present embodiment is preferably particles.

The average particle diameter (D₅₀) of the lithium sulfide particles is preferably 0.1 µm or more and 1000 µm or less, more preferably 0.5 µm or more and 100 µm or less, and still more preferably 1 µm or more and 20 µm or less. In the description herein, the average particle diameter (D₅₀) is a particle diameter which reaches 50% (volume-based) of the whole by sequentially integrating particles from the smallest particle diameter when a particle size distribution integration curve is drawn, and is an average particle diameter in which the volume distribution can be measured using, for example, a laser diffraction/scattering type particle size distribution measuring device. In addition, among the raw materials exemplified above, it is preferable that the solid raw material has an average particle diameter similar to that of the lithium sulfide particles described above, that is, it is preferable that the solid raw material is within the same range as the average particle diameter of the lithium sulfide particles described above.

When using lithium sulfide, diphosphorus pentasulfide and lithium halide as solid electrolyte raw materials, the ratio of lithium sulfide relative to the total of lithium sulfide and diphosphorus pentasulfide is preferably 65 to 85% by mole, more preferably 70 to 82% by mole, and even more preferably 74 to 80% by mole, from the viewpoint of obtaining higher chemical stability and higher ionic conductivity.

When using lithium sulfide, diphosphorus pentasulfide, lithium halide, and other solid electrolyte raw materials used as necessary, the content of lithium sulfide and diphosphorus pentasulfide relative to the total of these is preferably 50 to 99% by mole, more preferably 55 to 85% by mole, and even more preferably 60 to 80% by mole.

Furthermore, when using lithium bromide and lithium iodide in combination as lithium halides, the ratio of lithium bromide relative to the total of lithium bromide and lithium iodide is preferably 1 to 99% by mole, more preferably 20 to 80% by mole, still more preferably 35 to 80% by mole, and particularly preferably 45 to 70% by mole, from the viewpoint of improving ionic conductivity.

Furthermore, when using lithium bromide and lithium chloride in combination as lithium halides, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole, from the viewpoint of improving ionic conductivity.

When a halogen molecule is used as the solid electrolyte raw material and when lithium sulfide and diphosphorus pentasulfide are used, relative to the total number of moles of lithium sulfide and diphosphorus pentasulfide excluding lithium sulfide having the same number of moles as the number of moles of the halogen molecule, the ratio of the number of moles of lithium sulfide excluding lithium sulfide having the same number of moles as the number of moles of the halogen molecule preferably falls within a range of 60 to 90%, more preferably falls within a range of 65 to 85%, further preferably falls within a range of 68 to 82%, still more preferably falls within a range of 72 to 78%, particularly preferably falls within a range of 73 to 77%. This is because higher ionic conductivity can be obtained with these ratios.

Further, from the same viewpoint, when using lithium sulfide, diphosphorus pentasulfide, and a halogen molecule, the content of the halogen molecule relative to the total amount of lithium sulfide, diphosphorus pentasulfide, and halogen molecule is preferably 1 to 50% by mole, more preferably 2 to 40% by mole, even more preferably 3 to 25% by mole, and further more preferably 3 to 15% by mole.

When using lithium sulfide, diphosphorus pentasulfide, a halogen molecule, and lithium halide, the content of the halogen molecule (α% by mole) and the content of lithium halide (β% by mole) relative to the total amount of these, preferably satisfy the following formula (2), more preferably satisfy the following formula (3), even more preferably satisfy the following formula (4), and further more preferably satisfy the following formula (5). $2 \leq 2 α + β \leq 100$ (2) $4 \leq 2 α + β \leq 80$ (3) $6 \leq 2 α + β \leq 50$ (4) $6 \leq 2 α + β \leq 30$ (5)

When two types of halogens are used as molecules, and the number of moles of halogen atoms in one substance is A1 while the number of moles of halogen atoms in the other substance is A2, A1 : A2 is preferably 1 to 99 : 99 to 1, more preferably 10 : 90 to 90 : 10, still more preferably 20 : 80 to 80 : 20, and yet still more preferably 30 : 70 to 70 : 30.

When two types of halogen molecules are used and the two types of halogen molecules are bromine and iodine, in a case where the number of moles of bromine is A1 and the number of moles of iodine is A2, A1 : A2 is preferably 1 to 99 : 99 to 1, more preferably 20 : 80 to 80 : 20, still more preferably 35 : 65 to 80 : 20, and yet still more preferably 45 : 55 to 70 : 30.

Further, when the two types of halogen molecules are bromine and chlorine, and the number of moles of bromine is B1 while the number of moles of chlorine is B2, B1 : B2 is preferably 1 to 99 : 99 to 1, more preferably 15 : 85 to 75 : 25, still more preferably 25 : 75 to 60 : 40, and yet still more preferably 35 : 45 to 65 : 55.

### (Complexing Agent)

As described above, the complexing agent is a compound that easily forms a complex with the solid electrolyte raw material contained in the raw material-containing substance, for example, a compound that can form a complex with lithium sulfide, diphosphorus pentasulfide, which are preferably used as solid electrolyte raw materials, Li₃PS₄ obtained when these are used, and a solid electrolyte raw material which further contains a halogen atom (hereinafter, also collectively referred to as "solid electrolyte raw materials and the like").

As the complexing agent, any compound having the above-described properties can be used without any particular limitations, and in particular, a compound containing an atom having a high affinity with a lithium atom, for example, a heteroatom such as a nitrogen atom, an oxygen atom, and a chlorine atom is preferable, and a compound having a group containing these heteroatoms is more preferable. This is because these heteroatoms and the group containing the heteroatoms can coordinate (bond) with lithium.

The heteroatom present in the molecule of the complexing agent has a high affinity with a lithium atom and it is considered to have properties of easily forming a complex (hereinafter, also simply referred to as "complex") by bonding to the solid electrolyte raw materials and the like. Therefore, it is considered that by mixing the solid electrolyte raw material and the complexing agent, a complex is formed, and the dispersion state of the solid electrolyte raw material, especially the dispersion state of halogen atoms, is easily maintained uniformly, and as a result, a sulfide solid electrolyte having high ionic conductivity can be obtained.

Regarding the ability of the complexing agent to form a complex with the solid electrolyte raw materials and the like, it can be directly confirmed by, for example, an infrared absorption spectrum measured by FT-IR analysis (diffuse reflection method).

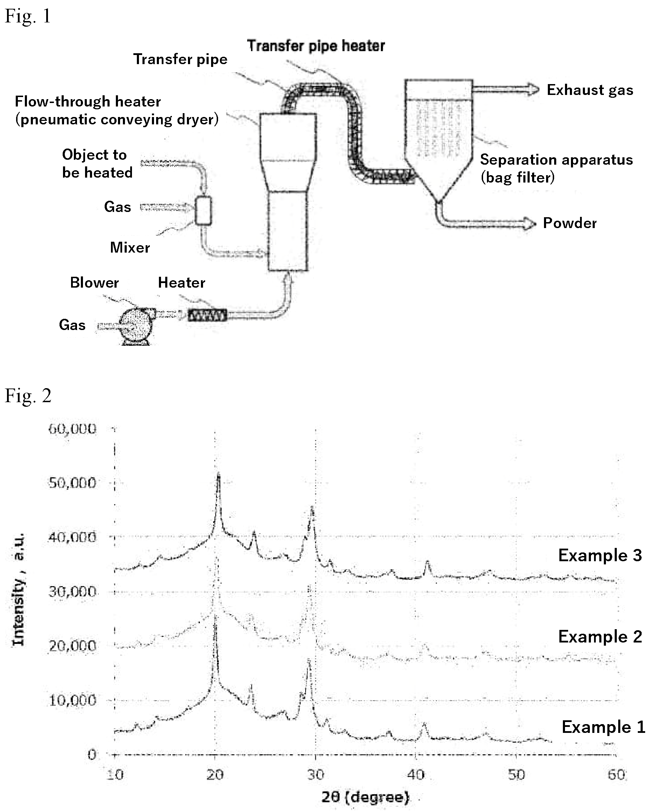

As a complexing agent, when a powder obtained by stirring tetramethylethylenediamine (hereinafter also simply referred to as "TMEDA"), which is one of the preferable complexing agents, and lithium iodide (LiI), and the complexing agent itself are analyzed by FT-IR analysis (diffuse reflection method), the spectrum is different from that of TMEDA itself, especially in the peak derived from the C-N stretching vibration at 1000 to 1250 cm⁻¹. Furthermore, even considering that it is known that a LiI-TMEDA complex is formed by stirring and mixing TMEDA and lithium iodide (for example, see Aust. J. Chem., 1988, 41, 1925-34, especially Fig. 2), etc., it is reasonable to think that a LiI-TMEDA complex is formed.

Furthermore, for example, when a powder obtained by stirring a complexing agent (TMEDA) and Li₃PS₄ is analyzed by FT-IR analysis (diffuse reflection method) in the same manner as above, it can be confirmed that the spectrum differs from the spectrum of TMEDA itself in the peak derived from the C-N stretching vibration at 1000 to 1250 cm⁻¹, on the other hand it can also be confirmed that the spectrum is similar to that of the LiI-TMEDA complex. From this, it may be considered that a Li₃PS₄-TMEDA complex is formed.

In the production method of the present embodiment, these complexes obtained by mixing raw material-containing substances and a complexing agent are used as an electrolyte precursor, and the complexing agent is removed from the electrolyte precursor powder in a heated air stream to produce the sulfide solid electrolyte.

The complexing agent preferably has at least two heteroatoms which can be coordinated (bonded) in the molecule, and more preferably has a group containing at least two heteroatoms in the molecule. By having a group containing at least two heteroatoms in the molecule, solid electrolyte raw materials and the like can be bonded via at least two heteroatoms in the molecule. Further, among the heteroatoms, nitrogen atoms are preferred, and as the group containing nitrogen atoms, amino groups are preferred. That is, an amine compound is preferred as the complexing agent.

The amine compound is not particularly limited as long as it has an amino group in its molecule since it can promote the formation of a complex; however, a compound having at least two amino groups in its molecule is preferred. By having such a structure, solid electrolyte raw materials and the like can be bonded via at least two nitrogen atoms in the molecule, to form the complex.

Examples of such amine compounds include amine compounds such as aliphatic amines, alicyclic amines, heterocyclic amines, and aromatic amines, which can be used alone or in combination of a plurality of kinds.

More specifically, as the aliphatic amines, aliphatic primary diamines such as ethylenediamine, diaminopropane, and diaminobutane; aliphatic secondary diamines such as N,N'-dimethylethylenediamine, N,N'-diethylethylenediamine, N,N'-dimethyldiaminopropane, N,N'-diethyldiaminopropane; and aliphatic tertiary diamines such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane , and N,N,N',N'-tetramethyldiaminohexane; are representatively preferred. In the examples in the present description, for example, in the case of diaminobutane, unless otherwise specified, in addition to isomers regarding the position of the amino groups such as 1,2-diaminobutane, 1,3-diaminobutane, and 1,4-diaminobutane, all isomers, such as linear and branched isomers for butane, are included.

The carbon number of the aliphatic amine is preferably 2 or more, more preferably 4 or more, and even more preferably 6 or more, and the upper limit is preferably 10 or less, more preferably 8 or less, and even more preferably 7 or less. The carbon number in the aliphatic hydrocarbon group in the aliphatic amine is preferably 2 or more, and the upper limit is preferably 6 or less, more preferably 4 or less, and even more preferably 3 or less.

As the alicyclic amines, alicyclic diamines; such as alicyclic primary diamines such as cyclopropanediamine and cyclohexanediamine; alicyclic secondary diamines such as bisaminomethylcyclohexane; and alicyclic tertiary diamines such as N,N,N',N'-tetramethyl-cyclohexane diamine and bis(ethylmethylamino)cyclohexane; are representativelyy preferred, and in addition, as the heterocyclic amine, heterocyclic diamines; such as heterocyclic primary diamines such as isophorone diamine; heterocyclic secondary diamines such as piperazine and dipiperidylpropane; and heterocyclic tertiary diamines such as N,N-dimethylpiperazine and bismethylpiperidylpropane; are representatively preferred.

The carbon number of the alicyclic amine and heterocyclic amine is preferably 3 or more, more preferably 4 or more, and the upper limit is preferably 16 or less, more preferably 14 or less.

In addition, as the aromatic amines, aromatic diamines; such as aromatic primary diamines such as phenyldiamine, tolylenediamine, and naphthalenediamine; aromatic secondary diamines such as N-methylphenylenediamine, N,N'-dimethylphenylenediamine, N,N'-bismethylphenylphenylenediamine, N,N'-dimethylnaphthalenediamine, and N-naphthylethylenediamine; and aromatic tertiary diamines such as N,N-dimethylphenylenediamine, N,N,N',N'-tetramethylphenylenediamine, N,N,N',N'-tetramethyldiaminodiphenylmethane, and N,N,N',N'-tetramethyl naphthalenediamine; are representatively preferred.

The carbon number of the aromatic amine is preferably 6 or more, more preferably 7 or more, and even more preferably 8 or more, and the upper limit is preferably 16 or less, more preferably 14 or less, and even more preferably 12 or less.

The amine compound used in the present embodiment may be substituted with a substituent such as an alkyl group, an alkenyl group, an alkoxyl group, a hydroxy group, and a cyano group, or a halogen atom.

Although diamine was illustrated as a specific example, it goes without saying that the amine compound that can be used in the present embodiment is not limited to diamine, for example, aliphatic monoamines corresponding to various diamines such as trimethylamine, triethylamine, ethyldimethylamine, and the above aliphatic diamines, also, piperidine compounds such as piperidine, methylpiperidine, and tetramethylpiperidine, pyridine compounds such as pyridine and picoline, morpholine compounds such as morpholine, methylmorpholine, and thiomorpholine, imidazole compounds such as imidazole and methylimidazole, alicyclic monoamines corresponding to the above-described alicyclic diamines such as monoamines, a heterocyclic monoamine corresponding to the above heterocyclic diamine, monoamines corresponding to the above aromatic diamines such as aromatic monoamines, in addition, for example, polyamines having three or more amino groups such as diethylenetriamine, N,N',N"-trimethyldiethylenetriamine, N,N,N',N",N"-pentamethyldiethylenetriamine, triethylenetetramine, N,N'-bis[(dimethylamino)ethyl] -N,N'-dimethylethylenediamine, hexamethylenetetramine, and tetraethylenepentamine, can also be used.

Among the above, from the viewpoint of obtaining higher ionic conductivity, tertiary amines having a tertiary amino group as the amino group are preferred, a tertiary diamine having two tertiary amino groups are more preferred, a tertiary diamine having two tertiary amino groups at both ends are even more preferred, and an aliphatic tertiary diamine having tertiary amino groups at both ends are further more preferred. In the above amine compound, as the aliphatic tertiary diamine having tertiary amino groups at both ends, tetramethylethylenediamine, tetraethylethylenediamine, tetramethyldiaminopropane, and tetraethyldiaminopropane are preferred, and considering ease of availability, etc., tetramethylethylenediamine and tetramethyldiaminopropane are preferred.

Further, a compound having groups other than amino groups, such as a nitro group and an amide group, which contains a nitrogen atom as a heteroatom, can also obtain the same effect.

In the producing method of the present embodiment, as the complexing agent, in addition to a compound containing the above-described nitrogen atoms as a heteroatom, a compound containing oxygen atoms is preferred.

As the compound containing oxygen atoms, a compound having one or more functional groups selected from an ether group and an ester group as a group containing an oxygen atom is preferable, and among these, a compound having an ether group is particularly preferred. That is, as the complexing agent containing oxygen atoms, an ether compound is particularly preferred.

Examples of the ether compound include ether compounds such as aliphatic ether, alicyclic ether, heterocyclic ether, and aromatic ether, which can be used alone or in combination of a plurality of kinds.

More specifically, examples of the aliphatic ether include, monoethers such as dimethyl ether, diethyl ether, diisopropyl ether, dibutyl ether, and tert-butyl methyl ether; diethers such as dimethoxymethane, dimethoxyethane, diethoxymethane, and diethoxyethane; polyethers having three or more ether groups such as diethylene glycol dimethyl ether (diglyme) and triethylene oxide glycol dimethyl ether (triglyme); and ethers containing hydroxy groups such as diethylene glycol and triethylene glycol.

The carbon number of the aliphatic ether is preferably 2 or more, more preferably 3 or more, and even more preferably 4 or more, and the upper limit is preferably 10 or less, more preferably 8 or less, and even more preferably 6 or less.

The carbon number of the aliphatic hydrocarbon group in the aliphatic ether is preferably 1 or more, and the upper limit is preferably 6 or less, more preferably 4 or less, and even more preferably 3 or less.

Examples of the alicyclic ethers include ethylene oxide, propylene oxide, tetrahydrofuran, tetrahydropyran, dimethoxytetrahydrofuran, cyclopentyl methyl ether, dioxane, and dioxolane, and examples of the heterocyclic ethers include furan, benzofuran, benzopyran, dioxene, dioxin, morpholine, methoxyindole, and hydroxymethyldimethoxypyridine.

The carbon number of the alicyclic ether and heterocyclic ether is preferably 3 or more and more preferably 4 or more, and the upper limit is preferably 16 or less and more preferably 14 or less.

Examples of the aromatic ethers include methyl phenyl ether (anisole), ethyl phenyl ether, dibenzyl ether, diphenyl ether, benzylphenyl ether, and naphthyl ether.

The carbon number of the aromatic ether is preferably 7 or more and more preferably 8 or more, and the upper limit is preferably 16 or less, more preferably 14 or less, and even more preferably 12 or less.

The ether compound used in the present embodiment may be substituted with a substituent such as an alkyl group, an alkenyl group, an alkoxyl group, a hydroxy group, and a cyano group, or a halogen atom.

Among the above ether compounds, aliphatic ethers are preferred, and dimethoxyethane and tetrahydrofuran are more preferred, from the viewpoint of obtaining higher ionic conductivity.

Examples of the ester compound include ester compounds such as aliphatic ester, alicyclic ester, heterocyclic ester, and aromatic ester, which can be used alone or in combination of a plurality of kinds.

More specifically, examples of the aliphatic esters include formic acid esters such as methyl formate, ethyl formate, and triethyl formate; acetate esters such as methyl acetate, ethyl acetate, propyl acetate, isopropyl acetate, butyl acetate, and isobutyl acetate; propionate esters such as methyl propionate, ethyl propionate, propyl propionate, and butyl propionate; oxalate esters such as dimethyl oxalate and diethyl oxalate; malonic acid esters such as dimethyl malonate and diethyl malonate; and succinic acid esters such as dimethyl succinate and diethyl succinate.

The carbon number of the aliphatic ester is preferably 2 or more, more preferably 3 or more, and even more preferably 4 or more, and the upper limit is preferably 10 or less, more preferably 8 or less, and even more preferably 7 or less. The carbon number of the aliphatic hydrocarbon group in the aliphatic ester is preferably 1 or more and more preferably 2 or more, and the upper limit is preferably 6 or less, more preferably 4 or less, and even more preferably 3 or less.

Examples of the alicyclic esters include methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate, and examples of the heterocyclic esters include methyl pyridinecarboxylate, ethyl pyridinecarboxylate, propyl pyridinecarboxylate, methyl pyrimidinecarboxylate, ethyl pyrimidinecarboxylate, and lactones such as acetolactone, propiolactone, butyrolactone, and valerolactone.

The carbon number of the alicyclic ester and heterocyclic ester is preferably 3 or more and more preferably 4 or more, and the upper limit is preferably 16 or less and more preferably 14 or less.

Examples of the aromatic esters include benzoic acid esters such as methyl benzoate, ethyl benzoate, propyl benzoate, and butyl benzoate; phthalate esters such as dimethyl phthalate, diethyl phthalate, dibutyl phthalate, butylbenzyl phthalate, and dicyclohexyl phthalate; and trimellitic acid esters such as trimethyl trimellitate, triethyl trimellitate, tripropyl trimellitate, tributyl trimellitate, and trioctyl trimellitate.

The carbon number of the aromatic ester is preferably 8 or more and more preferably 9 or more, and the upper limit is preferably 16 or less, more preferably 14 or less, and even more preferably 12 or less.

The ester compound used in the present embodiment may be substituted with a substituent such as an alkyl group, an alkenyl group, an alkoxyl group, a hydroxy group, and a cyano group, or a halogen atom.

Among the above ester compounds, from the viewpoint of obtaining higher ionic conductivity, aliphatic esters are preferred, acetic esters are more preferred, and ethyl acetate is particularly preferred.

From the viewpoint of efficiently forming a complex, the amount of the complexing agent added is such that the molar ratio of the amount of the complexing agent added relative to the total molar amount of lithium atoms contained in the raw material-containing substance is preferably 0.1 or more and 2.0 or less, more preferably 0.5 or more and 1.5 or less, even more preferably 0.8 or more and 1.2 or less, and most preferably 1.0.

### (Mixing)

In the production method of the present embodiment, the solid electrolyte raw material described above and a complexing agent are mixed.

In the present embodiment, the form in which the solid electrolyte raw material and the complexing agent are mixed may be any of a solid form and a liquid form; however, since the solid electrolyte raw material contains a solid and the complexing agent is in a liquid form, the solid electrolyte raw material and the complexing agent are usually mixed in a form in which the solid electrolyte raw material is present in the liquid complexing agent. Further, when mixing the raw materials and the complexing agent, a solvent may be further mixed as necessary. Hereinafter, in a place where mixing of the raw material and the complexing agent is described, the complexing agent also includes a solvent used as necessary, unless otherwise specified.

There is no particular limitation on the method of mixing the solid electrolyte raw material and the complexing agent, and the solid electrolyte raw material and the complexing agent may be mixed by being introduced into a device capable of mixing the solid electrolyte raw material and the complexing agent. For example, when the solid electrolyte raw material is gradually added after supplying the complexing agent into a tank and activating stirring blades, a good mixing state of the solid electrolyte raw materials can be obtained and the dispersibility of the raw materials is improved, therefore it is preferred.

However, when using a halogen molecule as a solid electrolyte raw material, the solid electrolyte raw material may not be solid, specifically, at room temperature and normal pressure, fluorine and chlorine are gases, and bromine is liquid. In such cases, for example, when the solid electrolyte raw material is a liquid, it may be supplied with the complexing agent into the tank separately from other solid electrolyte raw materials, and when the solid electrolyte raw material is a gas, it may be supplied by blowing into the complexing agent to which the solid electrolyte raw material, which is a solid, is added.

The production method of the present embodiment is characterized by including mixing a solid electrolyte raw material with a complexing agent. In other words, since it is sufficient to mix the solid electrolyte raw material and the complexing agent and does not require pulverization, it can also be produced by a method which does not use equipment that is generally called as a grinder such as media type grinders including a ball mill and a bead mill, and used for the purpose of pulverizing solid electrolyte raw materials. In the production method of the present embodiment, by simply mixing the solid electrolyte raw material and the complexing agent, the solid electrolyte raw material contained in the raw material-containing substance and the complexing agent are mixed, and a complex, that is, an electrolyte precursor may be formed. In addition, in order to shorten the mixing time to obtain the complex or to make it finely powdered, the mixture of the raw material and the complexing agent may be pulverized with a grinder; however, as described above, it is preferable that a grinder is not used.

On the other hand, the electrolyte precursor may be pulverized by a grinder.

Examples of the apparatus for mixing the solid electrolyte raw material and the complexing agent include a mechanical stirring type mixer equipped with a stirring blade in a tank. Examples of the mechanical stirring type mixer include a high-speed stirring mixer and a double-arm mixer, and the high-speed stirring mixer is preferably used from the viewpoint of increasing the uniformity of the solid electrolyte raw material in the mixture of the solid electrolyte raw material and the complexing agent and obtaining higher ionic conductivity. Further, examples of the high-speed stirring type mixer include a vertical shaft rotation type mixer and a horizontal shaft rotation type mixer, and a mixer of either type may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the solid electrolyte raw material and obtaining higher ionic conductivity, a shovel type, a flat blade type, a C-blade type, etc. are preferable. Further, in the mechanical stirring type mixer, it is preferable to install a circulation line for discharging the object to be stirred outside the mixer and returning it to the inside of the mixer. By doing so, raw materials with heavy specific gravity such as lithium halide are stirred without settling or stagnation, and it becomes possible to mix more uniformly.

The location of the circulation line to be installed is not particularly limited, however it is preferably installed at a location such that the object is discharged from the bottom of the mixer and returned to the top of the mixer. This makes it easier to uniformly stir the solid electrolyte raw material, which easily settles, on the convection caused by circulation. Furthermore, it is preferable that a return port is located below the surface of the liquid of the object to be stirred. By doing so, it is possible to suppress the liquid to be stirred from splashing and adhering to the wall surface inside the mixer.

The temperature conditions for mixing the solid electrolyte raw material and the complexing agent are not particularly limited, and are, for example, -30 to 100°C, preferably - 10 to 50°C, more preferably around room temperature (23°C) (for example, approximately room temperature ±5°C). In addition, the mixing time is about 0.1 to 150 hours, preferably 1 to 120 hours, more preferably 4 to 100 hours, and still more preferably 8 to 80 hours, from the viewpoint of mixing more uniformly and obtaining higher ionic conductivity.

By mixing the solid electrolyte raw material and the complexing agent, a complex is formed by the solid electrolyte raw materials and the like, and the complexing agent. More specifically, it is considered that in the complex, a lithium atom, a sulfur atom, a phosphorus atom, and a halogen atom contained in the solid electrolyte raw material are directly bonded to each other via and/or not via the complexing agent by the action of these atoms and the complexing agent. That is, in the production method of the present embodiment, the complex obtained by mixing the solid electrolyte raw material and the complexing agent can be said to be composed of the complexing agent, a lithium atom, a sulfur atom, a phosphorus atom, and a halogen atom.

The complex obtained in the present embodiment does not completely dissolve in the complexing agent which is a liquid and is usually solid, therefore a suspension in which the complex is suspended, in the complexing agent and the solvent which is added if necessary, can be obtained. Therefore, the method for producing a solid electrolyte of the present embodiment corresponds to a heterogeneous system in a so-called liquid phase method.

### (Solvent)

In the present embodiment, a solvent may be further added when mixing the solid electrolyte raw material and the complexing agent.

When a complex which is a solid is formed in a liquid complexing agent, separation of components may occur when the complex is easily soluble in the complexing agent. Therefore, by using a solvent in which the complex does not dissolve, elution of components in the electrolyte precursor can be suppressed. In addition, by mixing the solid electrolyte raw material and the complexing agent using a solvent, complex formation is promoted and each main component can be more evenly present, and the dispersion state of the solid electrolyte raw material, especially an electrolyte precursor in which the dispersion state of halogen atoms is maintained uniformly, is obtained, and thus, as a result, the effect of obtaining high ionic conductivity is easily exhibited.

The method for producing a solid electrolyte of the present embodiment is a so-called heterogeneous method, and it is preferable that the complex does not completely dissolve in the liquid complexing agent and precipitates. The solubility of the complex can be adjusted by adding a solvent. In particular, since halogen atoms are easily eluted from the complex, the desired complex can be obtained by suppressing the halogen atoms from eluting by adding a solvent. As a result, a sulfide solid electrolyte having high ionic conductivity can be easily obtained through an electrolyte precursor in which components such as solid electrolyte raw materials, particularly solid electrolyte raw materials and the like containing a halogen atom, are uniformly dispersed.

As the solvent having such properties, a solvent having a solubility parameter of 10 or less is preferred. In the description herein, the solubility parameter is described in various documents, such as "Chemistry Handbook" (published in 2004, revised 5th edition, Maruzen Co., Ltd.), and is a value δ ((cal/cm³)^{1/2}) calculated by the following formula (1), which is also called Hildebrand parameter or SP value.

[Math. 1] $δ = \sqrt{\left(ΔH-RT\right) / V}$ (1) (In formula (1), ΔH is a molar heat generation, R is a gas constant, T is a temperature, and V is a molar volume.)

By using a solvent with a solubility parameter of 10 or less, compared to the above-described complexing agent, solid electrolyte raw materials, especially raw materials containing halogen atoms such as halogen atoms and lithium halide, and furthermore, component containing halogen atoms constituting the complex (for example, an aggregate in which a lithium halide and a complexing agent are bonded to each other) and the like can be in a state where they are relatively more difficult to dissolve. Therefore, in the complex, particularly the halogen atoms become easily fixed and the halogen atoms are present in a good dispersed state in the obtained electrolyte precursor and even in the solid electrolyte, making it possible to obtain a solid electrolyte having high ionic conductivity. That is, it is preferable that the solvent used in the present embodiment has a property in which the complex does not dissolve. From the same viewpoint, the solubility parameter of the solvent is preferably 9.5 or less, more preferably 9.0 or less, and even more preferably 8.5 or less.

More specifically, as the solvent used in the present embodiment, it is possible to widely adopt solvents that have been conventionally used in the production of the solid electrolyte, and examples thereof include hydrocarbon solvents such as aliphatic hydrocarbon solvents, alicyclic hydrocarbon solvents, and aromatic hydrocarbon solvents; solvents containing a carbon atom such as alcohol-based solvents, ester-based solvents, aldehyde-based solvents, ketone-based solvents, ether-based solvents having 4 or more carbon atoms on one side, and solvents containing a carbon atom and a heteroatom. Among these solvents, solvents may be appropriately selected and used from those having preferably a solubility parameter within the above range.

More specifically, examples include aliphatic hydrocarbon solvents such as hexane (7.3), pentane (7.0), 2-ethylhexane, heptane (7.4), octane (7.5), decane, undecane, dodecane, and tridecane; alicyclic hydrocarbon solvents such as cyclohexane (8.2) and methylcyclohexane; aromatic hydrocarbon solvents such as benzene, toluene (8.8), xylene (8.8), mesitylene, ethylbenzene (8.8), tert-butylbenzene, trifluoromethylbenzene, nitrobenzene, chlorobenzene (9.5), chlorotoluene (8.8), and bromobenzene; alcohol-based solvents such as ethanol (12.7) and butanol (11.4); aldehyde-based solvents such as formaldehyde, acetaldehyde (10.3) and dimethylformamide (12.1); ketone-based solvents such as acetone (9.9) and methyl ethyl ketone; ether-based solvents such as dibutyl ether, cyclopentyl methyl ether (8.4), tert-butyl methyl ether, and anisole; and solvents containing carbon atoms and heteroatoms such as acetonitrile (11.9), dimethyl sulfoxide, and carbon disulfide. Note that the numerical value in parentheses in the above example is the SP value.

Moreover, the above-described illustrations are just examples, and for example, those having isomers may include all isomers. Further, as long as it is a halogen atom-substituted solvent, an alicyclic hydrocarbon solvent, or an aromatic hydrocarbon solvent, it may also include, for example, a substituted aliphatic group such as an alkyl group.

Among these solvents, aliphatic hydrocarbon solvents, alicyclic hydrocarbon solvents, aromatic hydrocarbon solvents, and ether-based solvents are preferred, and from the viewpoint of obtaining high ionic conductivity more stably, heptane, cyclohexane, toluene, ethylbenzene, diethyl ether, diisopropyl ether, dibutyl ether, dimethoxyethane, cyclopentyl methyl ether, tert-butyl methyl ether, and anisole are more preferred, diethyl ether, diisopropyl ether, and dibutyl ether are even more preferred, diisopropyl ether and dibutyl ether are further more preferred, and cyclohexane is particularly preferred. The solvent used in the present embodiment is preferably the organic solvent exemplified above, and is an organic solvent different from the complexing agent described above. In the present embodiment, these solvents may be used alone or in combination of a plurality of kinds.

### [Drying]

The production method of the present embodiment may include drying the electrolyte precursor after obtaining the electrolyte precursor. The electrolyte precursor obtained through the aforementioned mixing may contain a complexing agent and a solid electrolyte raw material that were not contributing to the formation of the electrolyte precursor, as well as a solvent used as necessary. In such cases, it is preferable to include a drying step. By drying, it is possible to preliminarily remove a remaining complexing agent, which was not contributing to the formation of the electrolyte precursor, as well as a solvent used as necessary. By preliminarily removing the remaining complexing agent, and the solvent used as necessary in this way, the electrolyte precursor can be heated more directly. Therefore, it becomes possible to separate and remove the complexing agent more efficiently.

Examples of the drying method include filtration using a glass filter and the like, solid-liquid separation by decantation, and solid-liquid separation using a centrifuge. For the solid-liquid separation, specifically, decantation to remove the supernatant complexing agent and the solvent which is optionally used after the suspension is transferred to a container and the solid is precipitated, furthermore, for example, filtration using a glass filter with a pore size of about 10 to 200 µm, preferably 20 to 150 µm, is easy.

It can also be dried by heating using a dryer. Drying of the electrolyte precursor may be performed under any pressure condition, such as increased pressure, normal pressure, and reduced pressure, and is preferably performed under normal pressure or reduced pressure. In particular, considering drying at a lower temperature, it is preferable to dry using a vacuum pump, under reduced pressure or even under vacuum.

As the temperature conditions for drying, the drying may be performed at a temperature equal to or higher than the boiling point of the remaining complexing agent or the solvent used as necessary. Specific temperature conditions cannot be determined completely since they may change depending on the type of the complexing agent and the solvent used, however preferably at 5°C or higher, more preferably at 10°C or higher, and even more preferably at 15°C or higher, and the upper limit is preferably 110°C or lower, more preferably 85°C or lower, and even more preferably 70°C or lower.

As for the pressure conditions, as described above, it is preferable to be under normal pressure or reduced pressure, and in the case of reduced pressure, specifically, preferably 85 kPa or less, more preferably 80 kPa or less, and even more preferably 70 kPa or less. The lower limit may be a vacuum (0 kPa), and considering ease of pressure adjustment, it is preferably 1 kPa or more, more preferably 2 kPa or more, and even more preferably 3 kPa or more.

In the production method of the present embodiment, when drying is performed, drying may be performed while heating after performing the solid-liquid separation.

Further, in the production method of the present embodiment, drying may or may not be performed. For example, in cases where the electrolyte precursor obtained through the aforementioned mixing is a mixture containing a remaining complexing agent and, a solvent used as necessary, the object to be heated in a fluidized dryer may be either the mixture or an electrolyte precursor powder obtained by drying the mixture. As described above, since the electrolyte precursor can be heated more directly, the electrolyte precursor is preferable as the object to be heated.

### [Obtaining Powder by Heating Using Flow-Through Heater]

The production method of the present embodiment includes
heating the electrolyte precursor obtained through the aforementioned mixing using a flow-through heater to obtain a powder.

By heating the electrolyte precursor obtained by obtaining the electrolyte precursor in a flow-through heater, the complexing agent is removed from the electrolyte precursor, that is, the complexing agent is removed from the complex which is formed by the solid electrolyte raw materials and the like and the complexing agent, to obtain the sulfide solid electrolyte.

### (Flow-Through Heater)

More specifically, the heating in a flow-through heater can be performed by supplying the object to be heated into the flow-through heater, and for example, a commercially available heater as a flow-through heater can be used. A flow-through heater is a heating device capable of heating an object to be heated while causing it to flow through the heater (or, to move within the heater). The object to be heated, supplied to the flow-through heater, is discharged after being heated within the flow-through heater.

As the flow-through heater, any device capable of heating an object while causing the object to be heated to flow through the device may be adopted without particular restriction, and preferred examples of the heater include pneumatic conveying dryers, spray dryers, and fluidized dryers. Among these, pneumatic conveying dryers are preferable.

The spray dryer is a dryer that dries a fluid (including slurries) in a liquid form by spraying it from a spray nozzle into a drying gas maintained at a predetermined temperature, and dryers commercially available as "spray dryers" or the like may be utilized. Furthermore, examples of the fluidized dryers include medium-fluidized dryers utilizing a medium (for example, some of which are commercially available under names such as "slurry dryers"), as well as band-fluidized-bed dryers utilizing a band conveyor.

In addition, details regarding the pneumatic conveying dryers will be described later.

The heating temperature in obtaining the powder, that is, the heating temperature in the flow-through heater, is preferably 80°C or higher, more preferably 90°C or higher, and still more preferably 100°C or higher, and the upper limit thereof is preferably 180°C or lower, more preferably 165°C or lower, and still more preferably 150°C or lower. When the heating temperature falls within the aforementioned range, the complexing agent can be removed from the electrolyte precursor more efficiently while simultaneously safeguarding the separation apparatus. Here, in cases where a flow-through heater is employed, a temperature difference will exist between the heating temperature and the actual temperature of the object to be heated. The "heating temperature in obtaining the powder" shall be understood as the "heating temperature within the flow-through heater".

### (Pneumatic Conveying Dryer)

In the production method of the present embodiment, it is preferable to employ a pneumatic conveying dryer. By utilizing a pneumatic conveying dryer, the object to be heated is dispersed within a heated air stream through direct contact with the heated air stream, and consequently, the contact area between the electrolyte precursor and the heated air stream is increased. Therefore, the complexing agent contained in the electrolyte precursor can be heated efficiently. Furthermore, the air stream of the heated air stream enables the complexing agent to be quickly separated and removed. Moreover, the regeneration of the complex and the generation of impurities are suppressed, and thus it becomes easier to obtain a sulfide solid electrolyte having high quality with few impurities and high ionic conductivity.

The pneumatic conveying dryer is a device capable of heating an object to be heated by a heated air stream by supplying the object to be heated into a pipe to which the heated air stream is supplied, and a direct hot air type pneumatic conveying dryer in which the heated air stream and the object to be heated are in direct contact with each other is preferable.

As the pneumatic conveying dryer, for example, as shown in Fig. 1, a pneumatic conveying dryer including a heating portion having a cylindrical container shape (also referred to as a "cylindrical container type pneumatic conveying dryer") is preferably used. When the heating portion is a cylindrical container, the cross-sectional areas of the object to be heated and the flow path of the heated air stream are widened. Therefore, even in a case where the object to be heated adheres to and solidifies on the inner wall surface and the cross-sectional area of the flow path is reduced due to the adhesion and solidification, it is possible to suppress the influence on the fluctuation due to the turbulence and the blockage of the flow. As a result, stable drying is easily performed. In addition, it is suitable for mass treatment as compared with other types to be described later; moreover, it becomes easy to continue long-term operation, and it is easy to perform visual inspection and open cleaning, so that it is also excellent in maintainability.

As the pneumatic conveying dryer, it is preferable to use a pneumatic conveying dryer having a structure capable of heating an object to be heated while swirling a heated air stream, for example, a pneumatic conveying dryer in which a dispersion plate is provided so that the heated air stream swirls in the pipe, and a pneumatic conveying dryer in which at least a part of the pipe has an annular shape or a semicircular shape (also referred to as a "circular annular pneumatic conveying dryer" and a "semicircular pneumatic conveying dryer", respectively). In a case where a pneumatic conveying dryer having such a structure is adopted, it is possible to suppress the adhesion of the electrolyte precursor to the inner wall, and it is possible to perform classification by centrifugal force by using the mass difference between the electrolyte precursor from which the complexing agent has been removed and the electrolyte precursor in which the complexing agent remains, and thus it is possible to more efficiently remove the complexing agent. In addition, it is possible to further reduce the size of the pneumatic conveying dryer, and it is possible to save space.

In addition, as the pneumatic conveying dryer, for example, a pneumatic conveying dryer of a type in which a vertically long pipe that holds a length necessary for heating is used, and a heated air stream is introduced from below the vertically long pipe and is heated while being co-flowed with the object to be heated (also referred to as a "vertically long pipe type pneumatic conveying dryer") is preferably used. When a vertically long pipe type pneumatic conveying dryer is used, since the flow direction of the object to be heated and the heated air stream can be limited upward, it is possible to cope with changes in the flow rate, particle diameter, and density of the object to be heated, and stable drying becomes easy. In addition, since the structure is simple, even if the object to be heated adheres to the inner wall, the peeling operation can be easily performed, and thus it is easy to cope with long-term operation. Further, since it is a type that can cope with an increase in the processing amount and the drying capacity by extending the dimension in the vertical direction, the installation area can be suppressed to be smaller than that of other types, and there is an advantage in terms of equipment installation.

In the vertically long pipe type pneumatic conveying dryer, the pipe diameters of the vertically long pipe portions may be the same, or may not be the same in order to adjust the state of heating to the object to be heated, and may have a partially wide or narrow portion.

When heating using a flow-through heater, it is preferable that media particles are not used. By not using media particles such as ceramic balls and zirconia beads, it is possible to suppress excessive contact with the heated air stream due to adhesion of the electrolyte precursor to the media particles, and it is possible to suppress deterioration of the amorphous sulfide solid electrolyte due to deterioration of the electrolyte precursor. Therefore, the ionic conductivity is improved.

When a pneumatic conveying dryer is used, the gas used for the heated air stream heating the object to be heated may be adopted without particular limitation as long as it is a gas. For example, various gases such as an inert gas such as nitrogen and argon, and air can be adopted. In consideration of the cost, it is preferable to use nitrogen and air, and in consideration of improving the ionic conductivity, it is preferable to use nitrogen. These gases may be used singly or in a mixture of a plurality of kinds thereof.

In addition, the dew point temperature of the gas is preferably -10°C or lower, more preferably -20°C or lower, and still more preferably -30°C or lower from the viewpoint of suppressing a deterioration in the quality of the sulfide solid electrolyte caused by moisture contained in the gas.

Regarding the temperature of the heated air stream, there are no particular restrictions, provided that the heating is sufficient to remove the complexing agent from the electrolyte precursor. While it is not possible to give a definitive statement as the temperature may vary depending on the type of complexing agent used, it is generally preferable to set the temperature within the temperature range of the heating temperature in obtaining the aforementioned powder. Here, the temperature of the heated air stream is a supply temperature of the heated air stream, and is, for example, a supply temperature to the pneumatic conveying dryer in a case where the above-described pneumatic conveying dryer is used. Within the above range, the complexing agent can be more efficiently removed.

Since the temperature of the heated air stream decreases when the electrolyte precursor is heated, for example, in a case where the above-described pneumatic conveying dryer is used, the temperature of the heated air stream discharged from the pneumatic conveying dryer is lower than the supply temperature (temperature of the heated air stream) to the pneumatic conveying dryer. The outlet temperature is not necessarily determined because it varies depending on the scale of the pneumatic conveying dryer with respect to the supply temperature, but it is usually lower by 3°C or more, further can be lower by 5°C or more, and can be lower by 10°C or more.

In addition, the temperature of the electrolyte precursor is lower than the temperature of the heated air stream because the time for heating in the heated air stream is short and the temperature of the electrolyte precursor does not usually reach the temperature of the heated air stream. This applies not only when using a pneumatic conveying dryer but also when employing other types of flow-through heaters; in such cases, the temperature of the electrolyte precursor becomes lower than the internal temperature of the flow-through heater.

The temperature of the electrolyte precursor due to heating by the flow-through heater is preferably 40°C or higher, more preferably 90°C or higher, and still more preferably 100°C or higher as the temperature after the heating (that is, the temperature is also the temperature of the sulfide solid electrolyte obtained by removing the complexing agent from the electrolyte precursor), and the upper limit thereof is preferably 130°C or lower, more preferably 125°C or lower, and still more preferably 120°C or lower.

The supply amount of the heated air stream is not particularly limited as long as the complexing agent can be removed from the electrolyte precursor. The supply amount of the heated air stream is not necessarily determined because it varies depending on the type of the complexing agent, and the scale of the pneumatic conveying dryer to be used, but is preferably 0.1 m³/min or more, more preferably 0.3 m³/min or more, and still more preferably 0.5 m³/min or more, and the upper limit thereof is preferably 500 m³/min or less, more preferably 475 m³/min or less, and still more preferably 450 m³/min or less. Within the above range, the complexing agent can be more efficiently removed.

The supply amount of the heated air stream is not particularly limited as long as the complexing agent can be removed from the electrolyte precursor, and the supply amount is not necessarily determined because it varies depending on the type of the complexing agent, and the scale of the pneumatic conveying dryer to be used, but is preferably 1.0 g/m³ or more, more preferably 1.5 g/m³ or more, and still more preferably 2.0 g/m³ or more, and the upper limit thereof is preferably 50.0 g/m³ or less, as the supply amount of the electrolyte precursor (g/min)/the supply amount of the heated air stream (m³/min).

The flow velocity of the heated air stream is not particularly limited as long as the complexing agent can be removed from the electrolyte precursor, and the flow velocity is not necessarily determined because it varies depending on the type of the complexing agent, and the scale of the pneumatic conveying dryer to be used, but is preferably 5 m/s or more, more preferably 7.5 m/s or more, and still more preferably 9 m/s or more, and the upper limit thereof is preferably 35 m/s or less, more preferably 30 m/s or less, and still more preferably 25 m/s or less. Within the above range, the complexing agent can be more efficiently removed.

The heating time in the heating in the heated air stream is not particularly limited as long as the complexing agent can be removed from the electrolyte precursor, and the heating time is not necessarily determined because it varies depending on the type of the complexing agent, and the scale of the pneumatic conveying dryer to be used, but the upper limit is preferably 1 minute or less, more preferably 50 seconds or less, still more preferably 40 seconds or less, yet still more preferably 15 seconds or less, and particularly preferably 5 seconds or less. On the other hand, the lower limit is usually 0.05 seconds or more, preferably 0.1 seconds or more, and more preferably 0.2 seconds or more.

As described above, the heating time in the heated air stream is extremely short. Therefore, for example, the electrolyte precursor is not exposed to a high-temperature condition for a long time, deterioration due to heat can be suppressed, and a sulfide solid electrolyte having high ionic conductivity can be obtained.

Even when other types of flow-through heaters (preferably the aforementioned spray dryers and fluidized dryers) are employed, the heating time can be kept short due to the flow-through nature. Therefore, similar to the case of the pneumatic conveying dryer, deterioration due to heat can be suppressed, and a sulfide solid electrolyte having high ionic conductivity can be obtained.

### (Content of Complexing Agent)

By heating using the above-described fluidized heater, the complexing agent can be removed from the electrolyte precursor, and the electrolyte precursor becomes an amorphous sulfide solid electrolyte. However, not all of the complexing agent is removed from the electrolyte precursor, and as a result, the electrolyte precursor may remain, and the complexing agent may remain in the amorphous sulfide solid electrolyte. In this case, the content of the complexing agent contained in the sulfide solid electrolyte is preferably 0% by mass, that is, the complexing agent is not contained at all, but from the viewpoint of efficiently obtaining a sulfide solid electrolyte having high ionic conductivity, the content is usually 50% by mass or less, further 45% by mass or less, 35% by mass or less, 25% by mass or less, 15% by mass or less, 10% by mass or less, and 5% by mass or less, and the lower limit is about 0.1% by mass or more.

In addition, similar to the complexing agent, if a solvent is used, the solvent may also remain. In this case, the content of the solvent is also the same as the numerical range of the content of the complexing agent.

In the description herein, for the content of the complexing agent and the solvent to be used as necessary contained in the sulfide solid electrolyte, the powder obtained in Examples etc. is dissolved in a mixture of water and pentanol, and measured using a gas chromatography device (GC), and the complexing agent and the high boiling point solvent were quantified using an absolute calibration curve (GC calibration method).

### [Transferring and Heating Transfer Pipe]

The production method of the present embodiment includes transferring the powder obtained by heating using the aforementioned flow-through heater from the flow-through heater to a separation apparatus through a transfer pipe, and includes, in the transferring, heating the transfer pipe.

When transferring the powder obtained by heating using the flow-through heater to the separation apparatus through the transfer pipe, by heating the transfer pipe, it is possible to suppress a decrease in the temperature of the powder being transferred from the flow-through heater to the separation apparatus. As previously described, the powder transferred from the flow-through heater may contain, in addition to the amorphous sulfide solid electrolyte obtained through the complex decomposition of the electrolyte precursor, an amorphous sulfide solid electrolyte in which a complexing agent remains (which may be said to be in a state where the complex decomposition is in progress), or an electrolyte precursor. By heating the transfer pipe to suppress a decrease in the temperature of the powder, the complex decomposition proceeds, allowing for the more efficient production of a sulfide solid electrolyte.

The transfer of the powder obtained by heating using a flow-through heater from the flow-through heater to the separation apparatus may be accomplished via the transfer pipe, and there are no restrictions regarding the method employed for the transfer. For instance, when a pneumatic conveying dryer is utilized as the flow-through heater, the powder is conveyed along with the heated air stream, that is, it is transferred as a fluid containing the powder and the heated air stream. Furthermore, when employing other types of flow-through heaters, the powder discharged from the flow-through heater may be transferred via methods such as pneumatic conveying. Consequently, the powder discharged from the flow-through heater can be supplied to the separation apparatus through the transfer pipe, either in its powder form or as a fluid containing the powder.

Regarding the method for heating the transfer pipe, there are no restrictions on the method employed, provided that the transfer pipe can be effectively heated. For example, commercially available products, such as thermal insulation materials installation, jacket heaters and other heaters for heating or maintaining the temperature of piping, may be used. In addition, as the jacket heater, a steam jacket using steam as the heating medium, an electric jacket using electricity, or the like may be used.

The heating temperature of the transfer pipe may be set to a level sufficient to suppress a decrease in the temperature of the powder or the fluid containing the powder discharged from the flow-through heater, and it may be set as appropriate in accordance with the temperature of the powder (or fluid containing the powder) discharged from the flow-through heater. Furthermore, the heating temperature may also be set such that the temperature of the powder (or fluid containing the powder) discharged from the flow-through heater remains at or below the limit value for the supply temperature to the downstream separation apparatus.

The supply temperature of the powder or the fluid containing the powder discharged from the flow-through heater to the separation apparatus is not necessarily determined because the limit value of the supply temperature may vary depending on the type of apparatus employed in the separation apparatus. However, the supply temperature is preferably 150°C or lower, and the lower limit is preferably 50°C or higher, more preferably 60°C or higher, and even more preferably 70°C or higher.

Furthermore, the heating temperature of the transfer pipe may be adjusted such that the supply temperature of the powder or the fluid containing the powder discharged from the flow-through heater to the separation apparatus reaches the aforementioned temperature. Although it is not necessarily determined, the heating temperature is, for example, preferably set to 80°C or higher, more preferably 90°C or higher, and even more preferably 100°C or higher, and the upper limit is preferably 180°C or lower, more preferably 165°C or lower, and even more preferably 150°C or lower.

### [Collecting Using Separation Apparatus]

The production method of the present embodiment includes collecting, using a separation apparatus, the powder that has been transferred by the aforementioned transferring. The powder or the fluid containing the powder discharged from the flow-through heater is supplied to the separation apparatus in a state where temperature decrease has been suppressed within the transfer pipe and the complex decomposition has proceeded, and the powder is collected within the separation apparatus. The powder collected in the separation apparatus becomes a powder in which the complexing agent has been removed from the electrolyte precursor, that is, a powder of the amorphous sulfide solid electrolyte. For example, when a pneumatic conveying dryer is used as the flow-through heater, the powder (powder of the amorphous sulfide solid electrolyte) in which the complexing agent has been removed from the electrolyte precursor exists floating in the heated air stream. That is, the powder (powder of the amorphous sulfide solid electrolyte) exists floating in a fluid containing the powder and the heated air stream.

Consequently, the powder discharged from the flow-through heater can be utilized as an amorphous sulfide solid electrolyte by collecting using the separation apparatus and further, be utilized as a crystalline sulfide solid electrolyte by crystallization via heating, which will be described later, as needed.

### (Separation Apparatus)

As the separation apparatus used for collecting the powder supplied via the flow-through heater and the transfer pipe, a bag filter is preferably used from the viewpoint of efficiently collecting the powder. For example, when a pneumatic dryer is used as the flow-through heater, the powder from which the complexing agent has been removed from the electrolyte precursor (the powder of an amorphous sulfide solid electrolyte) can be recovered by supplying a fluid containing the powder from which the complexing agent has been removed from the electrolyte precursor (the powder of an amorphous sulfide solid electrolyte) and the heated air stream to the bag filter.

The filter used for the bag filter can be used without particular limitation, and examples thereof include filters made of materials such as polypropylene, nylon, acrylic, polyester, cotton, wool, heat-resistant nylon, polyamide polyimide, polyphenylene sulfide (PPS), glass fiber, and polytetrafluoroethylene (PTFE), and a filter with a function such as an electrostatic filter can also be used. Among these, a filter made of heat-resistant nylon, polyamide polyimide, polyphenylene sulfide (PPS), glass fiber, or polytetrafluoroethylene (PTFE) is preferred, a filter made of heat-resistant nylon, polyphenylene sulfide (PPS), or polytetrafluoroethylene (PTFE) is more preferred, and a filter made of polytetrafluoroethylene (PTFE) is particularly preferred.

The bag filter may have a shaking-off unit, and preferred examples thereof include units by a pulsation back pressure system and a pulse jet system, and among them, units by a pulse jet system is preferred.

An induced draft fan may be provided in the line from the exhaust port of the bag filter in order to forcibly exhaust the gas exhausted from the exhaust port. By exhausting the gas by the induced draft fan, the filtration in the bag filter proceeds smoothly, and the slurry can be dried in a shorter time.

### [Heating]

The production method of the present embodiment may include heating the powder collected by the aforementioned separation apparatus. The powder collected by the aforementioned separation apparatus is an amorphous sulfide solid electrolyte obtained through further progress of complex decomposition within the transfer pipe. In a case where a crystalline sulfide solid electrolyte is to be obtained, the amorphous sulfide solid electrolyte is preferably converted into a crystalline sulfide solid electrolyte by further heating (hereinafter, also referred to as "post-heating") separately from the heating by the flow-through heater.

Furthermore, the powder collected by the separation apparatus may contain, in addition to the amorphous sulfide solid electrolyte, an electrolyte precursor, an amorphous sulfide solid electrolyte in which a complexing agent remains (which may be said to be in a state where complex decomposition is in progress), as well as a complexing agent, and a solvent used as necessary. Furthermore, by performing the post-heating, as previously described, it becomes possible not only to convert the amorphous sulfide solid electrolyte into a crystalline sulfide solid electrolyte, but also to facilitate the complex decomposition of the electrolyte precursor and reduce the content of the complexing agent remaining in the amorphous sulfide solid electrolyte. Consequently, the resulting amorphous sulfide solid electrolyte can be converted into a crystalline sulfide solid electrolyte. Moreover, the post-heating enables the removal of any remaining complexing agent that did not contribute to the formation of the electrolyte precursor, as well as any solvent that is used as necessary.

Therefore, the quality of the sulfide solid electrolyte obtained by the production method of the present embodiment is enhanced, and high ionic conductivity can be more easily obtained.

The heating temperature of the post-heating is not particularly limited as long as it is a temperature higher than the temperature of the powder obtained by heating using the aforementioned flow-through heater, and for example, the heating temperature may be determined according to the structure of the crystalline solid electrolyte obtained by heating the amorphous sulfide solid electrolyte obtained by removing the complexing agent from the electrolyte precursor. Here, "a temperature higher than the temperature of the powder obtained by heating using a flow-through heater" refers to the temperature of the powder at the outlet of the flow-through heater.

More specifically, the heating temperature of the post-heating may be in a range of preferably 5°C or higher, more preferably 10°C or higher, and still more preferably 20°C or higher from the temperature of the peak top of the exothermic peak observed on the lowest temperature side as a starting point when the powder, that is, the amorphous solid electrolyte is subjected to differential thermal analysis (DTA) under a temperature rise condition of 10°C/min using a differential thermal analyzer (DTA apparatus), and the upper limit is not particularly limited, but may be about 40°C or lower. By setting in such a temperature range, it becomes possible not only to obtain a crystalline solid electrolyte more efficiently and reliably, but also to enhance the quality of the sulfide solid electrolyte and to obtain high ionic conductivity more easily.

The heating temperature of the post-heating cannot be determined completely since it changes depending on the structure of the crystalline solid electrolyte to be obtained; however, it is usually preferably 130°C or higher, more preferably 140°C or higher, and even more preferably 150°C or higher. The upper limit thereof is not particularly limited; however, it is preferably 300°C or lower, more preferably 280°C or lower, and even more preferably 250°C or lower.

The heating time of the post-heating is not particularly limited as long as the desired crystalline solid electrolyte can be obtained; however, for example, it is preferably 1 minute or more, more preferably 10 minutes or more, even more preferably 30 minutes or more, and further more preferably 1 hour or more. Further, the upper limit of the heating time is not particularly limited; however, it is preferably 24 hours or less, more preferably 10 hours or less, even more preferably 5 hours or less, and further more preferably 3 hours or less.

The post-heating can be performed at normal pressure, but in order to reduce the heating temperature, the post-heating can also be performed in a reduced pressure atmosphere, or even in a vacuum atmosphere.

Regarding the pressure condition, when heating in the reduced pressure atmosphere, it is preferably 85 kPa or less, more preferably 80 kPa or less, and even more preferably 70 kPa or less, and the lower limit may be vacuum (0 kPa), and considering the ease of adjustment of the pressure, it is preferably 1 kPa or more, more preferably 2 kPa or more, and even more preferably 3 kPa or more. When the pressure conditions are within the above range, the heating conditions can be made mild and it is possible to suppress increasing size of the equipment.

Further, the post-heating is preferably performed in an inert gas atmosphere (for example, nitrogen atmosphere, argon atmosphere). This is because deterioration (for example, oxidation) of the crystalline solid electrolyte can be prevented.

The post-heating method is not particularly limited; however, examples thereof include methods using a hot plate, a vacuum heating device, an argon gas atmosphere furnace, and a firing furnace. Further, industrially, a horizontal dryer, a horizontal vibrating fluidized dryer, etc. having a heating unit and a feed mechanism may be used, and they may be selected depending on the processing amount to be heated.

### (Amorphous Sulfide Solid Electrolyte)

The sulfide solid electrolyte obtained by the production method of the present embodiment may be either an amorphous sulfide solid electrolyte or a crystalline sulfide solid electrolyte as desired. That is, if post-heating is not performed, an amorphous sulfide solid electrolyte is obtained, and if post-heating is performed, a crystalline sulfide solid electrolyte is obtained.

The amorphous sulfide solid electrolyte obtained by the production method of the present embodiment contains a lithium atom, a sulfur atom, a phosphorus atom, and a halogen atom, and representative examples thereof preferably include solid electrolytes composed of lithium sulfide, phosphorus sulfide, and a lithium halide, for example, Li₂S-P₂S₅-LiI, Li₂S-P₂S₅-LiCl, Li₂S-P₂S₅-LiBr, and Li₂S-P₂S₅-LiI-LiBr; and solid electrolytes containing other atoms such as an oxygen atom and a silicon atom, for example, Li₂S-P₂S₅-Li₂O-LiI and Li₂S-SiS₂-P₂S₅-LiI. From the viewpoint of obtaining higher ionic conductivity, solid electrolytes composed of lithium sulfide, phosphorus sulfide, and a lithium halide, such as Li₂S-P₂S₅-LiI, Li₂S-P₂S₅-LiCl, Li₂S-P₂S₅-LiBr, and Li₂S-P₂S₅-LiI-LiBr, are preferred.

The types of atoms constituting the amorphous sulfide solid electrolyte can be confirmed by, for example, an ICP emission spectrophotometer.

When the amorphous sulfide solid electrolyte obtained by the production method of the present embodiment has at least Li₂S-P₂S₅, the molar ratio of Li₂S and P₂S₅ is preferably 65 to 85 : 15 to 35, more preferably 70 to 80 : 20 to 30, and still more preferably 72 to 78 : 22 to 28, from the viewpoint of obtaining higher ionic conductivity.

When the amorphous sulfide solid electrolyte obtained by the production method of the present embodiment is, for example, Li₂S-P₂S₅-LiI-LiBr, the total content of lithium sulfide and diphosphorus pentasulfide is preferably 60 to 95% by mole, more preferably 65 to 90% by mole, and still more preferably 70 to 85% by mole. Further, the ratio of lithium bromide relative to the total of lithium bromide and lithium iodide is preferably 1 to 99% by mole, more preferably 20 to 90% by mole, even more preferably 40 to 80% by mole, and particularly preferably 50 to 70% by mole.

In the amorphous sulfide solid electrolyte obtained by the production method of the present embodiment, the blending ratio (molar ratio) of lithium atoms, sulfur atoms, phosphorus atoms, and halogen atoms is preferably 1.0 to 1.8 : 1.0 to 2.0 : 0.1 to 0.8 : 0.01 to 0.6, more preferably 1.1 to 1.7 : 1.2 to 1.8 : 0.2 to 0.6 : 0.05 to 0.5, and still more preferably 1.2 to 1.6 : 1.3 to 1.7 : 0.25 to 0.5 : 0.08 to 0.4. Further, when bromine and iodine are used together as halogen atoms, the blending ratio (molar ratio) of lithium atoms, sulfur atoms, phosphorus atoms, bromine, and iodine is preferably 1.0 to 1.8 : 1.0 to 2. 0 : 0.1 to 0.8 : 0.01 to 0.3 : 0.01 to 0.3, more preferably 1.1 to 1.7 : 1.2 to 1.8 : 0.2 to 0.6 : 0.02 to 0.25 : 0.02 to 0.25, even more preferably 1.2 to 1.6 : 1.3 to 1.7 : 0.25 to 0.5 : 0.03 to 0.2 : 0.03 to 0.2, and further more preferably 1.35 to 1.45 : 1.4 to 1.7 : 0.3 to 0.45 : 0.04 to 0.18 : 0.04 to 0.18. By setting the blending ratio (molar ratio) of lithium atoms, sulfur atoms, phosphorus atoms, and halogen atoms within the above range, it becomes easy to obtain a solid electrolyte having a thio-LISICON Region II type crystal structure, an argyrodite type crystal structure, or the like to be described later and having a higher ionic conductivity.

The shape of the amorphous sulfide solid electrolyte is not particularly limited, and examples thereof include a particle shape.

The average particle diameter (D₅₀) of the particle shaped amorphous sulfide solid electrolyte is, for example, 0.01 µm or more, further 0.03 µm or more, 0.05 µm or more, and 0.1 µm or more, and the upper limit is 5 µm or less, further 3.0 µm or less, 1.5 µm or less, 1.0 µm or less, and 0.5 µm or less.

### (Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a Li₃PS₄ crystal structure, a Li₄P₂S₆ crystal structure, a Li₇PS₆ crystal structure, a Li₇P₃S₁₁ crystal structure, and a crystal structure having peaks in the vicinity of 2θ = 20.2° and in the vicinity of 23.6° (for example, JP 2013-16423 A).

Examples also include a Li₄₋ₓGe₁₋ₓPₓS₄ system thio-LISICON Region II type crystal structure (see Kanno et al., Journal of The Electrochemical Society, 148 (7) A742-746 (2001)), and a crystal structure similar to the Li₄₋ₓGe₁₋ₓPₓS₄ system thio-LISICON Region II type crystal structure (see Solid State Ionics, 177 (2006), 2721-2725). The crystal structure of the crystalline sulfide solid electrolyte obtained by the production method of the present embodiment is preferably the thio-LISICON Region II type crystal structure, among above, from the viewpoint of obtaining higher ionic conductivity. Herein, the term "thio-LISICON Region II type crystal structure" refers to either a Li₄₋ₓGe₁₋ₓPₓS₄ system thio-LISICON Region II type crystal structure or a crystal structure similar to the Li₄₋ₓGe₁₋ₓPₓS₄ system thio-LISICON Region II type crystal structure. As will be described later, the aforementioned thio-LISICON Region II type crystal structure and the aforementioned similar crystal structure are mutually very close in structure, given that their diffraction peaks are similar. Therefore, it is technically reasonable to treat the "thio-LISICON Region II type crystal structure" as a concept encompassing both the aforementioned thio-LISICON Region II type crystal structure and the aforementioned similar crystal structure.

Herein, the notation of the crystal structure of the "Li₄₋ₓGe₁₋ₓPₓS₄ system thio-LISICON Region II type" means that the crystal structure is found as a crystal structure composed of Li, Ge, P, and S atoms in the aforementioned literature. Since the sulfide solid electrolyte obtained by the production method of the present embodiment contains a lithium atom, a phosphorus atom, a sulfur atom, and a halogen atom, the sulfide solid electrolyte may not be represented by the composition formula of "Li₄₋ₓGe₁₋ₓPₓS₄" in the "Li₄₋ₓGe₁₋ₓPₓS₄ system thio-LISICON Region II type". However, in a case where the sulfide solid electrolyte obtained by the production method of the present embodiment has the same diffraction peak as the aforementioned "thio-LISICON Region II type crystal structure" (including the aforementioned "similar crystal structure"), it can be said that the sulfide solid electrolyte obtained by the production method of the present embodiment has a thio-LISICON Region II type crystal structure formed of a lithium atom, a phosphorus atom, a sulfur atom, and a halogen atom. The same applies to the argyrodite type crystal structure to be described later.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structure is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline Li₃PS₄ (β-Li₃PS₄).

In the X-ray diffractometry using CuKα line, the diffraction peak of the Li₃PS₄ crystal structure appears, for example, in the vicinity of 2θ = 17.5°, 18.3°, 26.1°, 27.3°, and 30.0°, the diffraction peak of the Li₄P₂S₆ crystal structure appears, for example, in the vicinity of 20 = 16.9°, 27.1°, and 32.5°, the diffraction peak of the Li₇PS₆ crystal structure appears, for example, in the vicinity of 2θ = 15.3°, 25.2°, 29.6°, and 31.0°, the diffraction peak of the Li₇P₃S₁₁ crystal structure appears, for example, in the vicinity of 2θ = 17.8°, 18.5°, 19.7°, 21.8°, 23.7°, 25.9°, 29.6°, and 30.0°, the diffraction peak of the Li₄₋ₓGe₁₋ₓPₓS₄ system thio-LISICON Region II type crystal structure appears, for example, in the vicinity of 20 = 20.1°, 23.9°, and 29.5°, and the diffraction peak of the crystal structure similar to the Li₄₋ₓGe₁₋ₓPₓS₄ system thio-LISICON Region II type appears, for example, in the vicinity of 20 = 20.2° and 23.6°. These peak positions may vary within a range of ±0.5°.

A crystalline sulfide solid electrolyte having the argyrodite type crystal structure having the structural skeleton of the above-described Li₇PS₆, in which a part of P is substituted with Si, is also preferably exemplified.

Examples of the compositional formulas of the argyrodite type crystal structure include crystal structures represented by the compositional formulas Li₇₋ₓP_{1-y}Si_{y}S₆ and Li₇₊ₓP_{1-y}Si_{y}S₆ (x is -0.6 to 0.6, and y is 0.1 to 0.6). The argyrodite type crystal structure represented by this composition formula is a cubic or orthorhombic, preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

Examples of the compositional formula of the argyrodite type crystal structure include a compositional formula of Li_{7-x-2y}PS_{6-x-y}Clₓ (0.8 ≤ x ≤ 1.7, 0 < y ≤ -0.25x + 0.5). The argyrodite type crystal structure represented by this compositional formula is preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

Further, examples of the compositional formula of the argyrodite type crystal structure include Li₇₋ₓPS₆₋ₓHₐₓ (Ha is Cl or Br, x is preferably 0.2 to 1.8). The argyrodite type crystal structure represented by this compositional formula is preferably a cubic crystal, and has peaks mainly appearing at positions of 2θ = 15.5°, 18.0°, 25.0°, 30.0°, 31.4°, 45.3°, 47.0°, and 52.0° in X-ray diffractometry using CuKα line.

These peak positions may vary within a range of ±0.5°.

In addition, the composition ratio of the atoms contained in the crystalline sulfide solid electrolyte is a composition ratio according to a compositional formula corresponding to each of the above-mentioned various crystal structures, and is preferably within the range of the composition ratio of each atom contained in the above-mentioned amorphous sulfide solid electrolyte. When the composition ratio of each atom is within the range of the composition ratio of each atom, a thio-LISICON Region II type crystal structure or an argyrodite type crystal structure is easily formed among the above-mentioned crystal structures.

### (Content of Complexing Agent)

By heating the powder collected by the aforementioned separation apparatus, the content of the complexing agent contained in the crystalline sulfide solid electrolyte becomes smaller than the content of the complexing agent contained in the amorphous sulfide solid electrolyte.

The content of the complexing agent contained in the crystalline sulfide solid electrolyte is preferably 0% by mass, that is, it is preferably that no complexing agent is contained at all; however, from the viewpoint of obtaining a sulfide solid electrolyte having high ionic conductivity more efficiently, it is usually 10% by mass or less, further 8% by mass or less, 5% by mass or less, 3% by mass or less, and 1% by mass or less, and the lower limit is about 0.01% by mass or more.

In addition, similar to the complexing agent, if a solvent is used, the solvent may also remain. In this case, the content of the solvent is also the same as the numerical range of the content of the complexing agent.

The shape of the crystalline sulfide solid electrolyte is not particularly limited, and examples thereof include a particle shape.

The average particle diameter (D₅₀) of the particle shaped crystalline sulfide solid electrolyte is, for example, 0.01 µm or more, further 0.03 µm or more, 0.05 µm or more, and 0.1 µm or more, and the upper limit is 5 µm or less, further 3.0 µm or less, 1.5 µm or less, 1.0 µm or less, and 0.5 µm or less. As described above, a jacket type heater (such as a vibration dryer) that has been conventionally used for removing complexing agents is not used in the production method of the present embodiment to obtain a sulfide solid electrolyte. Instead, a flow-through heater is used. Therefore, the generation of secondary particles due to aggregation of primary particles is suppressed, and the average particle diameter becomes small as the above range. By employing a flow-through heater to heat the electrolyte precursor and by heating the transfer pipe, an additional effect of reducing the average particle diameter is achieved.

Therefore, in the production method of the present embodiment, there is no need to perform pulverization (atomization) treatment.

Further, the specific surface area of the sulfide solid electrolyte obtained by the production method of the present embodiment is usually 10 m²/g or more, further 15 m²/g or more, 20 m²/g or more, or 25 m²/g or more. The upper limit is not particularly limited, and for example, about 50 m²/g or less. In the description herein, the specific surface area is a value measured by the BET method (gas adsorption method), and nitrogen may be used as the gas (nitrogen method), krypton also may be used as the gas (krypton method), it is appropriately selected and measured depending on the size of the specific surface area.

### (Application)

The sulfide solid electrolyte obtained by the production method of the present embodiment has high ionic conductivity and excellent battery performance, and thus is suitably used for a battery. A battery utilizing the crystalline sulfide solid electrolyte obtained through the production method of the present embodiment is referred to as a lithium-ion battery; furthermore, as described later, a battery in which the crystalline sulfide solid electrolyte is employed in the electrolyte layer is referred to as an all-solid-state battery.

The sulfide solid electrolyte of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au can be used.

### Examples

Next, the present invention will be specifically described with reference to Examples, but the present invention is not limited to these Examples.

### (Measurement of Powder XRD Diffraction)

Powder X-ray diffraction (XRD) measurement was performed as follows.

Each of the powders of the sulfide solid electrolytes obtained in Examples and Comparative Examples was filled in a groove having a diameter of 20 mm and a depth of 0.2 mm, and was leveled with glass to obtain a sample. The sample was sealed with a Kapton film for XRD and measured under the following conditions without being exposed to air.
Measuring device: D2 PHASER, manufactured by Bruker Co., Ltd.
Tube voltage: 30 kV
Tube current: 10 mA
X-ray wavelength: Cu-Kα line (1.5418 Å)
Optical system: concentration method
Slit configuration: Using solar slit 4°, divergence slit 1mm, Kβ filter (Ni plate)
Detector: semiconductor detector
Measurement range: 2θ = 10 to 60 deg
Step width, Scan speed: 0.05 deg, 0.05 deg/second

### (Measurement of Ionic Conductivity)

In the present examples, the ionic conductivity was measured as follows.

Circular pellets having diameters 10 mm (cross-sectional area S: 0.785 cm²) and heights (L) of 0.1 to 0.3 cm were molded from the crystalline solid electrolytes obtained in Example and Comparative example, to obtain samples. Electrode terminals were taken from the top and bottom of the sample, and measured by an AC impedance method at 25°C (frequency range: 5 MHz to 0.5 Hz, amplitude: 10 mV), and a Cole-Cole plot was obtained. The real part Z' (Ω) at the point where -Z" (Ω) becomes minimum in the vicinity of the right end of the arc observed in the high frequency side region was defined as the bulk resistance R (Ω) of the electrolyte, and the ionic conductivity σ (S/cm) was calculated according to the following equations. $R = ρ \left(L/S\right)$ $σ = 1 / ρ$

### (Measurement of Content of Complexing Agent Contained in Sulfide Solid Electrolyte)

The content of the complexing agent contained in the sulfide solid electrolyte was measured using a gas chromatography device (GC). The outline of the measurement is that a powder of a sulfide solid electrolyte decomposed with a mixture of water and pentanol (content of pentanol in the mixture: 90% by volume) is measured by GC, and the complexing agent is quantitated using an absolute calibration curve.

First, 0.1 g of the sample is accurately weighed and placed in a vial. 10 ml of a mixture of water and pentanol is placed into a vial and dissolved completely to decompose the sample completely. Approximately 1.5 ml of the dissolved sample is placed into a GC vial, covered with a lid, and stopped with a crimper. This is set on the GC autosampler to be measured. For the calibration curve, 0.5 g of the complexing agent to be used is weighed out, and the volume is adjusted to 50 mL (equivalent to 10,000 µg/mL) by a mixture of water and pentanol. This is diluted and adjusted to 2500, 1000, 250, 25, 2.5 µg/ml (standard solution) and measured by GC, and a calibration curve is prepared using the least squares method from the peak area and the concentration of the standard solution. The GC peak area value of the sample solution was applied to the calibration curve, and the concentration in the sample solution was calculated according to the following formula. 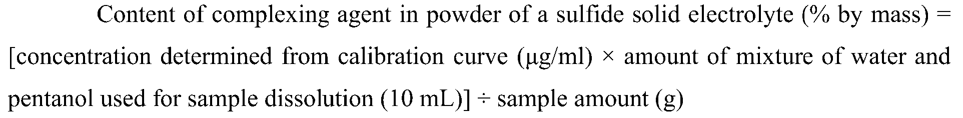 Content of complexing agent in powder of a sulfide solid electrolyte (% by mass) = [concentration determined from calibration curve (µg/ml) × amount of mixture of water and pentanol used for sample dissolution (10 mL)] ÷ sample amount (g)

### (Preparation Example: Preparation of Electrolyte Precursor)

The electrolyte precursors used in Examples and Comparative Examples were prepared by the following method. Here, the amounts of the solid electrolyte raw material and the complexing agent used were set to the amounts required in each of Examples and Comparative Examples while the ratio of the amounts used described in the following method was the same.

13.19 g of lithium sulfide, 21.26 g of diphosphorus pentasulfide, 4.15 g of lithium bromide, and 6.40 g of lithium iodide (total amount of solid electrolyte raw materials: 45 g) were introduced into a 1-liter reaction tank equipped with stirring blades under a nitrogen atmosphere. To this, 100 mL of tetramethylethylenediamine (TMEDA) as a complexing agent and 800 mL of cyclohexane as a solvent were added, and a stirring blade was operated to perform mixing by stirring at 30°C for 72 hours. 456 g of zirconia balls (diameter: 0.5 mmφ) (bead filling rate relative to the grinding chamber: 80%) was charged into a bead mill which is capable of circulating operation ("Labo Star Mini LMZ015 (product name)", manufactured by Ashizawa Finetech Ltd.), pulverized for 60 minutes while circulating between the reaction tank and the grinding chamber under the conditions of pump flow rate: 550 mL/min, circumferential speed: 8 m/s, and mill jacket temperature: 20°C, to obtain a slurry of the electrolyte precursor (complex). Next, the obtained slurry was immediately dried under vacuum at room temperature (23°C) to obtain a powder of the electrolyte precursor (complex). The content of the complexing agent contained in the obtained powder of the electrolyte precursor (complex) was 55% by mass.

### (Pneumatic Conveying Dryer)

The powder of the electrolyte precursor obtained in the above-described Preparation Example was heated in the heated air stream using an apparatus having a configuration shown in the schematic diagram of the apparatus used for heating in the heated air stream of Fig. 1. The apparatus shown in Fig. 1 is an apparatus mainly including a pneumatic conveying dryer (which is a cylindrical container type pneumatic conveying dryer) and a bag filter, and includes a blower and a heater for supplying the heated air stream, and a mixer for pneumatically transporting the object to be heated by gas. In addition, although not shown, a feeder capable of supplying the object to be heated in a state of powder or slurry may be provided (not shown).

In the apparatus shown in Fig. 1, the electrolyte precursor (object to be heated) is pneumatically transported to the lower portion of the pneumatic conveying dryer in the form of gas, and a heated air stream obtained by heating the gas with a heater is supplied from the bottom portion of the pneumatic conveying dryer. The object to be heated that has been heated in the heated air stream in the pneumatic conveying dryer becomes a powder (powder of amorphous sulfide) obtained by removing the complexing agent from the electrolyte precursor, and the heated air stream containing the powder is supplied to a bag filter downstream. The powder (powder of amorphous sulfide) obtained by removing the complexing agent from the electrolyte precursor is collected by the bag filter, and the heated air stream after the powder is collected is exhausted as it is.

### (Example 1)

Using the aforementioned pneumatic conveying dryer, nitrogen heated to 135°C was used as a heated air stream, and supply to the pneumatic conveying dryer was started at 3 m³/min. Next, the object to be heated (powder of the electrolyte precursor) was supplied to the pneumatic conveying dryer using a table feeder at a supply rate of 100.5 g/min. The object to be heated (powder of the electrolyte precursor) was heated in a heated air stream using a pneumatic conveying dryer, and the heated air stream discharged from the pneumatic conveying dryer was supplied to a bag filter of a separation apparatus via a transfer pipe to collect a powder (amorphous sulfide solid electrolyte) obtained by removing the complexing agent from the electrolyte precursor, which was contained in the heated air stream. This was continued for 20 minutes (that is, the operation time was 20 minutes).

In this instance, the transfer pipe was equipped with an electric jacket, and heating was performed with the temperature set to 125°C. The temperature of the heated air stream at the outlet of the pneumatic conveying dryer was 123°C, and the temperature of the heated air stream at the inlet of the bag filter was 122°C. Furthermore, the content of the complexing agent contained in the powder (amorphous sulfide solid electrolyte) at the inlet of the pneumatic conveying dryer and at the inlet of the bag filter after passing through the transfer pipe was 55.0% by mass and 20.4% by mass, respectively.

The powder (amorphous sulfide solid electrolyte) obtained by removing the complexing agent from the obtained electrolyte precursor was heated (post-heated) in a Schlenk tube at 110°C for 2 hours and further at 160°C for 2 hours, thereby obtaining a crystalline sulfide solid electrolyte.

The ionic conductivity of the crystalline sulfide solid electrolyte obtained in Example 1 was measured and found to be 4.0 (mS/cm). In addition, the crystalline sulfide solid electrolyte obtained in Example 1 was subjected to powder XRD diffraction measurement. The X-ray diffraction spectra are shown in Fig. 2. As shown in Fig. 2, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure.

### (Examples 2 and 3)

Amorphous sulfide solid electrolytes and crystalline sulfide solid electrolytes were obtained in the same manner as in Example 1, except that in Example 1, the supply rate of the object to be heated (powder of the electrolyte precursor), the supply temperature of the heated air stream, and the heating temperature of the transfer pipe were set to the conditions shown in Table 1. The content of the complexing agent content of the obtained sulfide solid electrolytes was measured. The results thereof, along with the amount of complexing agent removed, are presented in Table 1.

In addition, the crystalline sulfide solid electrolytes obtained in Examples 2 and 3 were subjected to powder XRD diffraction measurement. The X-ray diffraction spectra are shown in Fig. 2. As shown in Fig. 2, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure.

### (Comparative Examples 1 to 3)

Amorphous sulfide solid electrolytes and crystalline sulfide solid electrolytes were obtained in the same manner as in Example 1, except that in Example 1, the transfer pipe was not heated, and the supply rate of the object to be heated (powder of the electrolyte precursor), the supply temperature of the heated air stream, and the heating temperature of the transfer pipe were set to the conditions shown in Table 1. The content of the complexing agent in the obtained sulfide solid electrolytes was measured. The results thereof, along with the amount of complexing agent removed, are presented in Table 1.

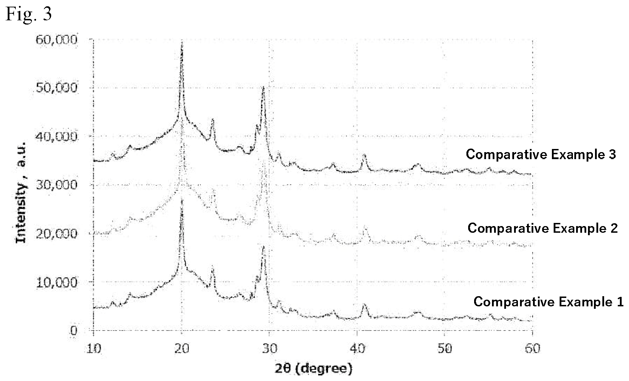

In addition, the crystalline sulfide solid electrolytes obtained in Comparative Examples 1 to 3 were subjected to powder XRD diffraction measurement. The X-ray diffraction spectra are shown in Fig. 3. As shown in Fig. 3, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure.

### [Table 1]

**Table 1**

| | | Examples | | | Comparative Example | | |
|---|---|---|---|---|---|---|---|
| | | 1 | 2 | 3 | 1 | 2 | 3 |
| Transfer pipe heated or not | | Yes | Yes | Yes | No | No | No |
| Electrolyte precursor supply rate: W₁ | g/min | 100.5 | 90.0 | 92.5 | 78.5 | 71.6 | 81.3 |
| Heated air stream | | | | | | | |
| Supply amount: W₂ | m³/min | 3 | 3 | 3 | 3 | 3 | 3 |
| Pneumatic conveying dryer supply temperature | °C | 135 | 130 | 125 | 135 | 130 | 125 |
| Pneumatic conveying dryer outlet temperature | °C | 123 | 119 | 115 | 124 | 119 | 116 |
| W₁/W₂ | g/m³ | 33.5 | 30.0 | 30.8 | 26.2 | 23.9 | 27.1 |
| Transfer pipe heating temperature | °C | 125 | 120 | 115 | - | - | - |
| Bag filter inlet temperature | °C | 122 | 117 | 113 | 116 | 111 | 109 |
| Complexing agent content | | | | | | | |
| Pneumatic conveying dryer inlet | % by mass | 55.0 | 55.0 | 55.0 | 55.0 | 55.0 | 55.0 |
| Pneumatic conveying dryer outlet (after passing through transfer pipe) | % by mass | 20.4 | 23.6 | 27.1 | 22.4 | 27.4 | 30.4 |
| Amount of complexing agent removed | g/min | 43.7 | 37.0 | 35.4 | 33.0 | 27.2 | 28.7 |

Based on the results of the Examples and Comparative Examples, it was confirmed that the method for producing a sulfide solid electrolyte according to the present embodiment enables the more efficient production of sulfide solid electrolytes exhibiting high ionic conductivity, and it can also be readily adapted for mass production. Specifically, the above Examples and Comparative Examples can be analyzed as follows.

The above Examples and Comparative Examples can be compared by, comparing Example 1 with Comparative Example 1, Example 2 with Comparative Example 2, and Example 3 with Comparative Example 3, based on the commonality of the supply temperature of the heated air stream. For example, when comparing Example 1 with Comparative Example 1, although the supply rate of the electrolyte precursor was 100.5 g/min in Example 1 versus 78.5 g/min in Comparative Example 1, with the supply rate 28.0% higher in Example 1, the content of the complexing agent at the outlet of the pneumatic conveying dryer (after passing through the heated transfer pipe) was 20.4% by mass in Example 1 versus 22.4% by mass in Comparative Example 1, with a greater reduction achieved in Example 1. As a result, the amount of the complexing agent removed was 43.7 g/min in Example 1 versus 33.0 g/min in Comparative Example 1, confirming an improvement effect of 32.6%. In the comparison between Example 2 and Comparative Example 2, despite the supply rate of the electrolyte precursor being 25.8% higher in Example 2, an improvement effect of 36.0% in the amount of complexing agent removed was confirmed. In the comparison between Example 3 and Comparative Example 3, despite the supply rate of the electrolyte precursor being 13.7% higher in Example 3, an improvement effect of 23.3% in the amount of complexing agent removed was confirmed.

Thus, it was confirmed that by heating the transfer pipe, the amount of complexing agent removed can be increased, that is, the production volume of the sulfide solid electrolyte can be increased, even when the supply rate of the electrolyte precursor is high.

In addition, as a result of powder XRD diffraction measurements, the sulfide solid electrolyte obtained in the Examples was confirmed to have a thio-LISICON Region II type crystal structure and exhibit high ionic conductivity.

### Industrial Applicability

According to the method for producing a sulfide solid electrolyte according to the present embodiment, a sulfide solid electrolyte having high ionic conductivity can be efficiently produced. Furthermore, the method can be readily adapted for the mass production of sulfide solid electrolytes. Therefore, the sulfide solid electrolytes of the present embodiment obtained by the production method of the present embodiment are suitably used for batteries, in particular, batteries used for information-related devices such as personal computers, video cameras, and mobile phones, and communication devices, in particular, all-solid-state batteries.

## Claims

1. A method for producing a sulfide solid electrolyte, comprising
mixing a raw material-containing substance containing a lithium atom, a phosphorus atom, a sulfur atom, and a halogen atom and a complexing agent to obtain an electrolyte precursor;
heating the electrolyte precursor using a flow-through heater to obtain a powder;
transferring the powder from the flow-through heater to a separation apparatus through a transfer pipe; and
collecting the transferred powder using the separation apparatus;
wherein in the transferring, the method includes heating the transfer pipe.

2. The method for producing a sulfide solid electrolyte according to claim 1, wherein a heating temperature of the transfer pipe is 80°C or higher and 180°C or lower.

3. The method for producing a sulfide solid electrolyte according to claim 1 or 2, wherein a heating temperature in obtaining the powder is 80°C or higher and 180°C or lower.

4. The method for producing a sulfide solid electrolyte according to any one of claims 1 to 3, wherein the flow-through heater is a heater selected from a pneumatic conveying dryer, a spray dryer, and a fluidized dryer.

5. The method for producing a sulfide solid electrolyte according to claim 4, wherein the flow-through heater is a pneumatic conveying dryer.

6. The method for producing a sulfide solid electrolyte according to any one of claims 1 to 5, comprising heating the powder collected by the collecting.
